# NEUE EUROPÄISCHE PATENTSCHRIFT

(11) **EP 3 440 329 B2**
(45) Veröffentlichungstag und Bekanntmachung des Hinweises auf die Entscheidung über den Einspruch: **27.12.2023**
(45) Hinweis auf die Patenterteilung: 17.02.2021
(21) Anmeldenummer: 17716504.0
(22) Anmeldetag: 05.04.2017
(51) Int. Cl.: F02D 19/08

(54) **KRAFTSTOFFFÖRDERSYSTEM FÜR KRAFTSTOFFANLAGEN UND VERFAHREN ZUR VERSORGUNG EINER BRENNKRAFTMASCHINE MIT BRENNSTOFF**
FUEL SUPPLY SYSTEM FOR FUEL SYSTEMS AND METHOD FOR SUPPLYING AN ENGINE WITH FUEL
SYSTÈME D'ALIMENTATION EN CARBURANT POUR SYSTÈMES DE CARBURANT ET PROCÉDÉ D'ALIMENTATION EN CARBURANT D'UN MOTEUR

(30) Priorität: 05.04.2016 WO PCT/EP2016/057443
(43) Veröffentlichungstag der Anmeldung: 13.02.2019
(60) Teilanmeldung: 20218013.9
(73) Patentinhaber: Befinal GmbH, 44627 Herne (DE)
(72) Erfinder: BECKER, Holger, 44627 Herne (DE)
(74) Vertreter: Frei Patent Attorneys
(86) Internationale Anmeldenummer: PCT/EP2017/058158
(87) Internationale Veröffentlichungsnummer: WO 2017/174680

(56) Entgegenhaltungen:
- EP-A1- 2 143 916
- EP-A1- 2 143 916
- EP-A2- 2 341 234
- WO-A1-2011/059316
- WO-A1-2011/130791
- WO-A1-2011/130791
- CA-A1- 2 842 729
- JP-U- S57 168 746
- US-A- 5 486 806
- US-A1- 2014 238 351
- US-B1- 6 298 833

## Beschreibung

Die Erfindung betrifft das Gebiet der Kraftstoffanlagen für Kraftmaschinen, insbesondere für Verbrennungskraftmaschinen, die auf einen Betrieb mit zwei (Bi-Fuel) oder mehr unterschiedlichen Kraftstoffen umrüstbar sind, beispielsweise Verbrennungsmotoren mit Kraftstoff-Direkteinspritzung.

Kraftstoffanlagen, welche eine Verbrennungskraftmaschine sowohl mit einem flüssigen Kraftstoff, wie beispielsweise Benzin, als auch mit einem Flüssiggas, wie beispielsweise Autogas (Liquefied Petroleum Gas, LPG), und gegebenenfalls zusätzlich mit einem dritten Kraftstoff versorgen, sind bekannt. Eine solche Kraftstoffanlage wird beispielsweise in DE 10 2008 043 930 A1 gelehrt.

Obwohl Verbrennungskraftmaschinen, die von einer Kraftstoffanlage mit verschiedenen Kraftstoffen versorgt wird, im Normalbetrieb zuverlässig arbeiten, kann insbesondere das Verdampfen von Flüssiggas in der Kraftstoffanlage oder in einem Einspritzsystem der Verbrennungskraftmaschine, wenn die Verbrennungskraftmaschinen vor ihrem Ausschalten mit einem Kraftstoff mit niedriger Verdampfungstemperatur betrieben wurde, zu Problemen, beispielsweise beim Starten, führen.

In WO 2013/115645 A1 wird eine Bi-Fuel Kraftstoffanlage gezeigt, bei welcher diesem Problem durch die Verwendung einer Hilfspumpe, welche flüssigen Kraftstoff aus einem entsprechenden Tank unter Druck in die Kraftstoffanlage pumpt, begegnet wird.

WO 2011/059316 A1 zeigt eine Bi-Fuel Kraftstoffanlage, bei welcher bei Bedarf Kraftstoff, insbesondere Kraftstoffdämpfe, über ein Bauteil abgelassen werden kann, welches sich zwischen einer Hochdruckpumpe, welche für beide Kraftstoffe verwendet wird, und der Verbrennungskraftmaschinen befindet.

In WO 2013/167753 A1 wird eine Bi-Fuel Kraftstoffanlage gezeigt, welche einen ersten Versorgungsstrang für flüssigen Kraftstoff und einen zweiten Versorgungsstrang für Flüssiggas aufweist. Die beiden Versorgungsstränge verlaufen bis zu einem Knotenpunkt unabhängig voneinander. Der erste Versorgungsstrang weist eine Kraftstoff-Hochdruckpumpe auf. Der zweite Versorgungsstrang weist eine Hilfspumpe auf und ist so eingerichtet, dass ein Verdampfen des Flüssiggases verhindert werden kann. EP2341234 offenbart auch eine Bi-Fuel Kraftstoffanlage.

Neben der Vermeidung von Problemen, die vom Verdampfen des Flüssiggases herrühren, besteht ferner Verbesserungspotenzial beim Umbau einer Kraftstoffanlage einer Verbrennungskraftmaschine auf Bi-Fuel Betrieb. Energieverbrauch, welcher insbesondere bei der Verwendung zusätzlicher Pumpen hoch ist, nicht auf das Flüssiggas abgestimmte Fördervolumen, Drücke oder Steuersysteme, Anzahl benötigter Bauteile, Montage- und Wartungsaufwand, aber auch Komptabilitätsprobleme und Universalität sind Bereiche, die verbessert werden können.

Es ist eine sich der Erfindung stellende Aufgabe, Systeme zur Verfügung zu stellen, welche insbesondere in Kraftstoffanlagen von Kraftmaschinen einsetzbar sind, welche durch zwei oder mehr Kraftstoffe betreibbar sind, und welche Nachteile des Standes der Technik überwinden.

Es ist insbesondere eine Aufgabe der Erfindung, ein System zur Verfügung zu stellen, das den Austausch eines Kraftstoffes in einem Teilbereich einer Kraftstoffanlage und/oder in einem Teilbereich einer Kraftmaschine durch einen anderen Kraftstoff auf effiziente und energiesparende Weise ermöglicht.

Es ist ferner eine Aufgabe der Erfindung, ein System zur Verfügung zu stellen, mit welchem auf effiziente und auf die Kraftstoffe beziehungsweise die Kraftmaschine angepasste Weise unterschiedliche Kraftstoffe in einer Kraftstoffanlage gefördert werden können.

Es ist ferner eine Aufgabe der Erfindung, eine Kraftstoffanlage für Kraftmaschinen, welche durch zwei oder mehr Kraftstoffe betreibbar sind, zur Verfügung zu stellen, wobei die Kraftstoffanlage je nach Anwendung und Einsatzgebiet ein erfindungsgemässes System zum Austausch eines Kraftstoffes durch einen anderen Kraftstoff, ein erfindungsgemässes System zur Förderung der Kraftstoffe oder beide Systeme aufweist.

Mindestens eine dieser Aufgaben wird durch die Erfindung gelöst, wie sie in den Patentansprüchen definiert ist. Die Erfindung betrifft eine Kraftstoffanlage gemäss Anspruch 1 und ein Verfahren gemäss Anspruch 14.

Ein **erster nicht erfindungsgemässer Aspekt** betrifft ein System zum Austausch von unterschiedlichen, zum Betrieb einer Kraftmaschine verwendbaren Kraftstoffen. Bei den Kraftmaschinen, in deren Kraftstoffanlagen beziehungsweise an deren Einspritzsystemen das System gemäss erstem Aspekt zum Einsatz kommt, handelt es sich insbesondere um Verbrennungskraftmaschinen, wie beispielsweise Verbrennungsmotoren. Die Kraftmaschine, beziehungsweise die dazugehörige Kraftstoffanlage, ist dabei ausgerüstet, um mit mindestens zwei verschiedenen Kraftstoffen zu arbeiten. Dazu weist die Kraftstoffanlage einen ersten Kraftstoffbehälter für einen ersten Kraftstoff, einen zweiten Kraftstoffbehälter für einen zweiten Kraftstoff, mindestens eine Kraftstoff-Hochdruckpumpe, einen Druckregler und ein Leitungssystem auf. Ferner weist die Kraftmaschine ein Einspritzsystem (auch common rail genannt) und einen Drucksensor auf. Das Leitungssystem ist dazu cingcrichtct, jeden Kraftstoff zu einem Eingang einer der mindestens einen Kraftstoff-Hochdruckpumpe und von einem Ausgang dieser Kraftstoff-Hochdruckpumpe zum Einspritzsystem zu leiten. Letztlich weist die Kraftmaschine Mittel auf, um ein Umschalten zwischen den Kraftstoffen zum Betrieb der Kraftmaschine zu ermöglichen.

Die Kraftstoffanlagen beziehungsweise die Einspritzsysteme, bei welchen die Systeme zum Einsatz kommen, versorgen insbesondere Kraftmaschinen mit einer Kraftstoff-Direkteinspritzung mit Kraftstoff.

Nachfolgend werden die Begriffe vorgelagert und nachgelagert verwendet, um die relative Position von Komponenten der Systeme und/oder der Kraftmaschine anzugeben. Diese Begriffe basieren auf dem Fluss eines Kraftstoffes von seinem Kraftstoffbehälter zur Einspritzanlage. Demzufolge ist beispielsweise der Kraftstoffbehälter eines Kraftstoffes der Kraftstoff-Hochdruckpumpe, zu welcher besagter Kraftstoff über das Leitungssystem geführt wird, vorgelagert. Das Einspritzsystem ist dann der Kraftstoff-Hochdruckpumpe nachgelagert.

Ein System gemäss dem ersten Aspekt dient zum Austausch von unterschiedlichen, zum Betrieb einer Kraftmaschine, insbesondere einer Kraftmaschine der eben beschriebenen Art, verwendbaren Kraftstoffen. Das System ist dazu eingerichtet, über einen Anschluss an einen Hochdruckbereich einer Kraftstoffanlage (nachfolgend hochdruckseitiger Anschluss des Systems genannt), welche die Kraftmaschine mit Kraftstoff versorgt, und/oder an ein Einspritzsystem der Kraftmaschine anschliessbar zu sein. Mit Hochdruckbereich werden dabei diejenigen Bereiche der Kraftstoffanlage bezeichnet, welche einer Kraftstoff-Hochdruckpumpe nachgelagert sind.

Beispielsweise kann das System zwischen einer Kraftstoff-Hochdruckpumpe und dem Einspritzsystem der Kraftmaschine anschliessbar sein.

Es ist aber auch möglich, dass das System oder Teile davon direkt an das Einspritzsystem der Kraftmaschine anschliessbar ist, beispielsweise über einen gesonderten Eingang und gegebenenfalls über einen gesonderten Ausgang am Einspritzsystem.

Ein System gemäss dem ersten Aspekt ist dadurch gekennzeichnet, dass das System eine Kraftstoff-Austauscheinheit, eine Steuerung und eine Austausch-Rücklaufleitung aufweist. Die Steuerung ist dazu eingerichtet, zweiten Kraftstoff über die Austausch-Rücklaufleitung aus dem Einspritzsystem abzulassen. Ferner ist die Kraftstoff-Austauscheinheit eingerichtet, einen ersten Kraftstoff bei ausgeschalteter Kraftmaschine unter Druck über den hochdruckseitigen Anschluss in das Einspritzsystem abzugeben, um einen im Einspritzsystem befindlichen zweiten zum Betrieb der Kraftmaschine verwendbaren Kraftstoff durch den ersten Kraftstoff zu ersetzen.

In anderen Worten: Die Kraftstoff-Austauscheinheit ist befähigt, den ersten Kraftstoff unter Druck über den hochdruckseitigen Anschluss in das Einspritzsystem abzugeben, um den im Einspritzsystem befindlichen zweiten zum Betrieb der Kraftmaschine verwendbaren Kraftstoff durch den ersten Kraftstoff zu ersetzen, auch wenn die Kraftmaschine selbst ausgeschalten ist. Das heisst insbesondere, dass kein Bauteil der Kraftmaschine bei besagtem Kraftstoff-Austausch aktiv beteiligt sein muss, beziehungsweise dass das System eingerichtet ist, alle nötigen Schritte zum Kraftstoff-Austausch autonom durchzuführen.

Ergänzend kann das System weitere hochdruckseitige oder niederdruckseitige Anschlüsse aufweisen, die dazu eingerichtet sind, das System an die Kraftstoffanlage und/oder die Kraftmaschine, insbesondere des Einspritzsystems, anzuschliessen. Das System kann ferner sowohl ein integraler Bestandteil von Kraftstoffanlage und/oder Einspritzsystem sein, als auch nachträglich montiert werden.

Das System ist insbesondere dazu eingerichtet, zwischen einem Ausgang der Kraftstoff-Hochdruckpumpe, welcher den ersten Kraftstoff auf einen für den Betrieb der Kraftmaschine benötigten Arbeitsdruck bringt, und dem Einspritzsystem, beziehungsweise dem Rail, angeordnet zu werden. Das heisst, dass das System über den hochdruckseitigen Anschluss in Verbindung mit dem Abschnitt des Leitungssystems der Kraftstoffanlage der Kraftmaschine steht, der sich zwischen Kraftstoff-Hochdruckpumpe des ersten Kraftstoffes, beziehungsweise besagtem Ausgang des Druckreglers der Kraftstoff-Hochdruckpumpe, und Einspritzsystem befindet. Dies schliesst das vor- oder nachgelagerte Vorhandensein weiterer Bauteile der Kraftstoffanlage sowie ein Anschluss des Systems an Teile des Leitungssystems, die sich nicht hinter besagter Kraftstoff-Hochdruckpumpe befinden, nicht aus.

Alternativ kann auch nur ein Teil des Systems an besagten Abschnitt des Leitungssystems der Kraftstoffanlage angeschlossen sein, während ein anderer Teil, beispielsweise die Kraftstoff-Austauscheinheit, direkt am Einspritzsystem, beziehungsweise am Common Rail desselben, angeschlossen ist.

Ferner ist es auch möglich, dass alle hochdruckseitigen Anschlüsse des Systems direkt am Einspritzsystem, insbesondere am Common Rail, angeschlossen sind.

In einer Ausführungsform weist die Kraftstoff-Austauscheinheit einen Druckspeicher auf, der dazu eingerichtet ist, ersten Kraftstoff unter Druck zu speichern.

Der Druck, unter welchem der erste Kraftstoff im Druckspeicher gespeichert wird, entspricht insbesondere dem Arbeitsdruck dieses Kraftstoffes (auch Systemdruck oder Kraftstoffdruck genannt). Besagter Druck ist folglich im Regelbereich des Arbeitsdrucks der Kraftmaschine, in welchem das System zum Einsatz kommt.

Falls es sich bei der Kraftmaschine um einen benzinbetriebenen Verbrennungsmotor handelt, ist besagter Druck zwischen 20 und 400 Bar. Bei den meisten benzinbetriebenen Verbrennungsmotoren der gegenwärtigen Generation ist der Regelbereich des Arbeitsdrucks und somit der Druck, unter welchem das Benzin im Druckspeicher speicherbar ist, zwischen 30 und 300 Bar, wobei benzinbetriebene Verbrennungsmotoren der mittleren und unteren Preisklasse eine Regelbereich zwischen 30 Bar (im Leerlauf) und 180 Bar (bei Beschleunigung) aufweisen. Im Falle von benzinbetriebenen Verbrennungsmotor ist der Druck, unter welchem der erste Kraftstoff im Druckspeicher speicherbar ist, folglich zwischen 20 und 400 Bar, insbesondere zwischen 30 und 300 Bar oder zwischen 40 und 180 Bar.

Falls es sich bei der Kraftmaschine um einen dieselbetriebenen Verbrennungsmotor handelt, kann der Druck, unter welchem der erste Kraftstoff im Druckspeicher speicherbar ist, 2300 Bar oder mehr betragen. Der Regelbereich des Arbeitsdrucks bei momentan auf dem Markt erhältlichen dieselbetriebenen Verbrennungsmotoren liegt zwischen etwas 150 und 2300 Bar

Falls die Kraftmaschine zusätzliche Elemente aufweist, welche Einfluss auf den Regelbereich des Arbeitsdrucks des ersten Kraftstoffes hat, wie beispielsweise einen Turbo oder einen Kompressor, kann sich der Druckbereich, unter welchem der erste Kraftstoff im Druckspeicher speicherbar ist, entsprechend ändern.

Es versteht sich von selbst, dass der Druck, unter welchem das Benzin im Druckspeicher speicherbar ist, auch ausserhalb der genannten Grenzwerte sein kann, falls der Trend zu Verbrennungsmotoren, beziehungsweise Einspritzsystemen, mit immer höheren Arbeitsdrücken anhält. Dies gilt sinngemäss auch für den unten genannten zweiten Aspekt und ist auch auf nachfolgend genannte Volumina, insbesondere Förder- und Austausch-Volumina, anzuwenden.

Die Verwendung eines Druckpuffers, insbesondere eines Gases wie beispielsweise Stickstoff, im Druckspeicher kann dazu dienen, den ersten Kraftstoff unter einem Druck im zuvor genannten Bereich zu speichern.

In besagter Ausführungsform kann das System ferner ein Druckspeicher-Ventil aufweisen, welches beim Befüllen des Druckspeichers dem Druckspeicher vorgelagert ist und welches durch die Steuerung zwischen einem offenen und einem geschlossenen Zustand schaltbar ist. In offenem Zustand steht der Druckspeicher über den hochdruckseitigen Anschluss in Kontakt mit dem Hochdruckbereich der Kraftstoffanlage oder mit dem Einspritzsystem, beziehungsweise dessen Common Rail. In geschlossenem Zustand ist der Druckspeicher von Hochdruckbereich und Einspritzsystem getrennt.

Ferner kann das System für ein langsames, beispielsweise kontinuierliches, Befüllen des Druckspeichers und ein rasches, insbesondere schlagartiges, Entleeren eingerichtet sein. Dazu kann das System zwischen dem Druckspeicher und dem hochdruckseitigen Anschluss ein Rückschlagventil mit einer Bohrung aufweisen. Bei der Bohrung kann es sich beispielsweise um eine Bohrung in der Rückschlagkugel oder in der Rückschlagplatte des Rückschlagventils handeln.

Andere Ausführungsformen für das langsame Befüllen und rasche Entleeren des Druckspeichers sind ebenfalls denkbar. Solche können beispielsweise eine Bypass-Bohrung aufweisen.

Das Rückschlagventil mit einer Bohrung, beziehungsweise das Element zum langsamen Befüllen und raschen Entleeren des Druckspeichers, kommt insbesondere in Kombination mit dem Druckspeicher-Ventil zum Einsatz. Besagtes Rückschlagventil, beziehungsweise besagtes Element, und das Druckspeicher-Ventil können Teil der Kraftstoff-Austauscheinheit sein.

Es versteht sich von selbst, dass Ventile in der Regel über Blenden verfügen, um Druck- und Druckfluss-Anpassungen vorzunehmen. Deshalb wird dies nachfolgend zumeist nicht explizit erwähnt.

Das System kann so ausgelegt sein, dass der Druckspeicher während des Betriebs der Kraftmaschine durch den ersten Kraftstoff befüllbar ist. Dabei kann das System insbesondere so ausgelegt sein, dass der erste Kraftstoff unter Arbeitsdruck im Druckspeicher gespeichert wird.

Insbesondere kann der Druckspeicher befüllbar sein, indem während des Betriebs der Kraftmaschine mit erstem Kraftstoff, erster Kraftstoff in Richtung Druckspeicher abgezweigt wird. Die abgezweigte Durchflussmenge kann dabei so gewählt werden, dass der Betrieb der Kraftmaschine nicht beeinträchtigt wird. Es hat sich gezeigt, dass abgezweigte Durchflussmengen, welche zu einem Befüllen des Druckspeichers im Bereich einiger Sekunden bis einiger Minuten, insbesondere im Bereich zwischen einer halben Minute und einer Minute, geeignet sein können.

Ferner kann das System so ausgelegt sein, dass es ein wiederholtes Ablassen/Befüllen zulässt.

Zum Befüllen des Druckspeichers kann beispielsweise das Druckspeicher-Ventil über die Steuerung kontrollierbar sein, um den Füllvorgang zu regeln. Die Regelung des Druckspeicher-Ventils kann dabei von Betriebsparametern der Kraftstoffanlage, beispielsweise des Betriebszustandes des Einspritzsystems, des verwendeten Kraftstoffes oder von Systemdrücken, insbesondere vom Arbeitsdruck in der Einspritzanlage, abhängig sein. Die Regelung des Druckspeicher-Ventils kann ferner temperatur- und/oder zeitgesteuert sein.

Alternativ kann das Befüllen des Druckspeichers über eine separate Leitung geschehen. Diese weist ein Rückschlagventil, gegebenenfalls mit einer Blende, auf und verfügt ihrerseits über einen hochdruckseitigen Anschluss an den Hochdruckbereich der Kraftstoffanlage oder an das Einspritzsystem. In dieser alternativen Ausführungsform zum Befüllen des Druckspeichers ist das Druckspeicher-Ventil während des Füllvorgangs geschlossen. Es dient in dieser Ausführungsform nur zum Ablassen des im Druckspeicher gespeicherten ersten Kraftstoffes.

In einer Ausführungsform weist die Kraftstoff-Austauscheinheit eine Boost-Pumpe auf, welche unabhängig vom Betriebszustand der Kraftmaschine aktivier- und betreibbar ist. Die Boost-Pumpe verfügt über einen Boost-Pumpen-Eingang, über welchen die Zufuhr von erstem Kraftstoff sichergestellt wird, und einen Boost-Pumpen-Ausgang, welcher über den hochdruckseitigen Anschluss des Systems mit dem Hochdruckbereich der Kraftstoffanlage und/oder mit dem Einspritzsystem verbunden ist.

Bei der Boost-Pumpe kann es sich insbesondere um eine Pumpe handeln, die dazu ausgelegt ist, gerade eine für die Füllung des Einspritzsystems mit erstem Kraftstoff bei ausgeschalteter Kraftmaschine ausreichende Menge an erstem Kraftstoff unter im Vergleich zum Systemdruck reduziertem Druck zu fördern. Ihr Antrieb kann beispielsweise über eine Batterie erfolgen, welche bei Betrieb der Kraftmaschine geladen wird.

Füllmenge und Druck hängen beispielsweise von der Kraftmaschine, dem Einspritzsystem und zumindest von dem verwendeten ersten Kraftstoff ab. Zum Beispiel kann es bei einem Vierzylinder-Verbrennungsmotor mit Kraftstoff-Direkteinspritzung und Betrieb mit Benzin (erster Kraftstoff) und LPG (zweiter Kraftstoff) nach Ablassen des LPGs ausreichend sein, ein paar hundert Milliliter Benzin unter ca. 20-30 Bar zu fördern, um ein problemloses Starten des Verbrennungsmotors zu gewährleisten. Insbesondere Fördermengen zwischen 200 und 500 ml sind in der Regel ausreichend.

Um die nötige Menge an erstem Kraftstoff fördern zu können, kann die Kraftstoff-Austauscheinheit ein Reservoir für den ersten Kraftstoff aufweisen, wobei dieses Reservoir mit dem Boost-Pumpen-Eingang verbunden ist.

Beim Reservoir kann es sich insbesondere um den ersten Kraftstoffbehälter, ein von diesem verschiedenen Behälter oder ein Leitungsbereich handeln. Vorteilhafterweise wird das Reservoir während des Betriebs der Kraftmaschine mit erstem Kraftstoff aufgefüllt, beziehungsweise die Boost-Pumpe greift über einen gesonderten Eingang auf den ersten Kraftstoffbehälter zu, so dass auf eine Aktivierung der Kraftstoffförderpumpe des ersten Kraftstoffbehälters bei ausgeschalteter Kraftmaschine verzichtet werden kann.

Ergänzend kann die Kraftstoff-Austauscheinheit mit Boost-Pumpe einen Druckspeicher der bereits genannten Art aufweisen. Dieser ist der Boost-Pumpe nachgelagert angeordnet und kann wie erwähnt ersten Kraftstoff unter Druck speichern.

Allerdings kann ein in Kombination mit einer Boost-Pumpe verwendeter Druckspeicher ein kleineres Füllvolumen aufweisen, als ein separat eingesetzter Druckspeicher.

Der Druckspeicher kann insbesondere dazu eingerichtet sein, den Druck von erstem Kraftstoff, welcher aus dem Boost-Pumpen-Ausgang in das Einspritzsystem, beziehungsweise das Rail, geströmt ist zu erhöhen. Dazu wird weiterer erster Kraftstoffunter Druck, insbesondere unter einem Druck der höher ist als der Druck von erstem aus der Boost-Pumpe strömendem Kraftstoff, aus dem Druckspeicher in Richtung Einspritzsystem abgelassen wird.

Beispielsweise kann die Boost-Pumpe dazu ausgelegt sein, ersten Kraftstoff unter ca. 20 Bar in das Einspritzsystem einzubringen. Das Ablassen des im Druckspeicher gespeicherten ersten Kraftstoffes kann dann den im Einspritzsystem, beziehungsweise im Rail, vorherrschende Druck auf über 40 Bar erhöhen.

In einer Ausführungsform wird der zweite Kraftstoff, welcher sich im Einspritzsystem befindet und über die Austausch-Rücklaufleitung aus demselben ablassbar ist, in einen Speicherbehälter oder in den zweiten Kraftstoffbehälter abgelassen.

Um ein solches Ablassen in den Speicherbehälter oder in den zweiten Kraftstoffbehälter zu gewährleisten, kann das System einen Anschluss oder eine Anschlussvorrichtung zu einem Niederdruckbereich der Kraftstoffanlage aufweisen. Der Niederdruckbereich zeichnet sich insbesondere durch einen in ihm herrschenden Druck aus, der in einem Bereich liegt, welcher zur Lagerung des zweiten Kraftstoffes geeignet ist. Beispielsweise kann dieser Druck im Falle von LPG als zweiten Kraftstoff im Bereich von 2 bis 10 Bar liegen.

Ergänzend kann die Austausch-Rücklaufleitung deshalb auf einer ersten Seite mit dem Einspritzsystem und auf einer zweiten Seite mit dem Kraftstoffbehälter des zweiten Kraftstoffes ("zweiter Kraftstoffbehälter") oder mit dem Speicherbehälter verbunden sein. Dabei kann die Austausch-Rücklaufleitung direkt an das Einspritzsystem und den Kraftstoffbehälter des zweiten Kraftstoffes, beziehungsweise den Speicherbehälter angeschlossen sein. Es kann allerdings vorteilhaft sein, die Austausch-Rücklaufleitung an das Leitungssystem der Kraftstoffanlage und/oder des Systems anzuschliessen.

Ferner weist die so ausgelegte Austausch-Rücklaufleitung ein Rücklaufventil auf. Dieses kontrolliert den Rücklauf des zweiten Kraftstoffes über die Austausch-Rücklaufleitung. Dazu ist es durch die Steuerung zwischen einem offenen und einem geschlossenen Zustand schaltbar. In offenem Zustand wird der im Einspritzsystem und in Teilen des Leitungssystems befindliche zweite Kraftstoff in den zweiten Kraftstoffbehälter abgelassen. In geschlossenem Zustand wird demzufolge ein solches Ablassen verhindert.

Ergänzend kann die Steuerung dazu ausgelegt sein, zuerst den im Einspritzsystem und in Teilen des Leitungssystems befindlichen zweiten Kraftstoff in den zweiten Kraftstoffbehälter oder den Speicherbehälter abzulassen, bevor über die Kraftstoff-Austauscheinheit erster Kraftstoff in das Einspritzsystem abgegeben wird.

Das Ablassen des zweiten Kraftstoffes kann neben einem Druckausgleich zwischen Einspritzsystem und zweitem Kraftstoffbehälter, auf einem AggregatszustandsWechsel von flüssig zu gasförmig des zweiten Kraftstoffes im Einspritzsystem beruhen. Dieser Aggregatszustandswechsel kann durch Rest- beziehungsweise Stauwärme im Bereich des Einspritzsystems verursacht sein.

Wie lange ein effizientes Ablassen des zweiten Kraftstoffes aus dem Einspritzsystem in den zweiten Kraftstoffbehälter nach Ausschalten der Kraftmaschine möglich ist, hängt insbesondere von der Kraftmaschine, dessen Betriebszustand und Steuerung, sowie des zweiten Kraftstoffes ab. Es hat sich gezeigt, dass zumindest bei Verbrennungsmotoren von Fahrzeugen, insbesondere von Personenwagen, und bei der Verwendung von LPG als zweiten Kraftstoff mehrere Stunden nach dem Ausschalten des Verbrennungsmotors der zweite Kraftstoff noch vom Einspritzsystem in den zweiten Kraftstoffbehälter abgelassen werden kann. In Versuchen war beispielsweise zwei Stunden nach dem Ausschalten eines durch längeren Betrieb warmen Verbrennungsmotors ein solches Ablassen noch problemlos möglich.

Das System kann für eine Vielzahl von Motortypen und/oder Motorenzuständen und/oder ersten und zweiten Kraftstoffen optimierbar sein, indem eine Vielzahl von Betriebsparametern des Systems verstellbar ist. Bei den Betriebsparametern handelt es sich insbesondere um Schaltzeiten, Zuwartzeiten, Durchflussmengen, abgezweigte Durchflussmengen, oder Drücke, insbesondere den Druck, unter welchem der erste Kraftstoff aus der Kraftstoff-Austauscheinheit abgegeben wird.

Die Motortypen können sich mit Blick auf den Hersteller und/oder des Anwendungsgebietes unterscheiden. Anwendungsgebiete sind beispielsweise Personenwagen, Lastwagen, landwirtschaftliche Fahrzeuge, Schiffe oder Flugzeuge, aber auch stationäre Maschinen mit Verbrennungsmotor, beispielsweise Stromerzeuger, Pumpen, Antriebe etc.

Unterschiedliche Motorenzustände können beispielsweise durch Alterungsprozesse, Tuning oder technische Änderungen am Einspritzsystem entstehen. Letztere können sowohl werkseitig vom Hersteller als auch benutzerseitig durchgeführt werden.

In einer Ausführungsform handelt es sich beim zweiten Kraftstoff um Autogas (auch Liquefied Petroleum Gas, LPG, genannt).

Alternativ kann es sich aber beispielsweise auch um verdichtetes Erdgas (Compressed Natural Gas, CNG), Flüssiggas, Liquefied Natural Gas (LNG), beziehungsweise alle flüssigen, brennbaren Stoffe (Biodiesel, Pflanzenöl, Alkohol, Ethanol etc., aber auch Gemische aus verschiedenen Kraftstoffen) handeln.

Ergänzend kann es sich beim ersten Kraftstoff um Benzin, Diesel oder einen anderen der vorgängig aufgelisteten, vom zweiten Kraftstoff verschiedenen Brennstoffe handeln.

In einer Ausführungsform ist das System dazu ausgelegt, dass der Austausch des in der Kraftstoff-Austauscheinheit, insbesondere im Einspritzsystem, befindlichen zweiten Kraftstoffes durch Verwendung der Kraftstoff-Austauscheinheit stattfindet, wenn mindestens eine der folgenden Bedingungen erfüllt ist:
- Die Kraftmaschine ist seit einer vorgegebenen Zeitspanne nicht mehr in Betrieb.
   Wie erwähnt, hängt die Zeitspanne, nach welcher der zweite Kraftstoff problemlos vom Einspritzsystem in den zweiten Kraftstoffbehälter abgelassen werden kann, von diversen Parametern ab. Dementsprechend kann die Zeitspanne, nach welcher der Austausch des im Einspritzsystem befindlichen zweiten Kraftstoffes durch ersten Kraftstoff stattfindet, beispielsweise von der Kraftmaschine, dessen Betriebszustand und Steuerung, sowie des zweiten Kraftstoffes abhängen.
- Eine vorgegebene Temperaturänderung wurde im Gebiet der Einspritzanlage registriert, nachdem die Kraftmaschine abgeschaltet wurde. Bei der Temperaturänderung handelt es sich insbesondere um eine Temperaturverminderung.
- Eine vorgegebene Temperatur wurde im Gebiet der Einspritzanlage unterschritten oder wird innerhalb einer gewissen Zeit nicht erreicht, nachdem die Kraftmaschine abgeschalten wurde. Letzteres dient insbesondere dazu, Problemen bei sehr heissen Temperaturen vorzubeugen.

Das System gemäss einer der zuvor beschriebenen Ausführungsformen, kann das kennzeichnende Element einer Kraftstoffanlage sein, welche eine Kraftmaschine mit unterschiedlichen Kraftstoffen versorgt. Die Kraftstoffanlage weist ferner einen ersten Kraftstoffbehälter für einen ersten Kraftstoff, einen zweiten Kraftstoffbehälter für einen zweiten Kraftstoff, mindestens eine Kraftstoff-Hochdruckpumpe und ein Leitungssystem auf. Dabei ist jeder Kraftstoffbehälter über das Leitungssystem mit einer Kraftstoff-Hochdruckpumpe und die mindestens eine Kraftstoff-Hochdruckpumpe über das Leitungssystem mit einem Einspritzsystem einer Kraftmaschine verbunden.

Die Kraftstoffanlage kann beispielsweise in Personenwagen, Lastwagen, landwirtschaftliche Fahrzeugen, Schiffen oder Flugzeugen, aber auch stationäre Maschinen wie beispielsweise Stromerzeuger, Pumpen und Antriebe zum Einsatz kommen.

Die Kraftstoffanlage, beziehungsweise das System gemäss einer der beschriebenen Ausführungsformen, kann ein Antriebsaggregat kennzeichnen, welches ferner eine Kraftmaschine aufweist.

Beim Antriebsaggregat handelt es sich beispielsweise um eine stationäre oder mobile Maschine mit Verbrennungsmotor, einen Stromerzeuger, oder einen Antrieb für eine stand-alone arbeitende Vorrichtung.

Ferner kann das Antriebsaggregat, beziehungsweise die Kraftstoffanlage oder das System gemäss einer der beschriebenen Ausführungsformen ein Transportmittel kennzeichnen. Beispiele solcher Transportmittel sind Fahrzeuge (Personenwagen, Lastwagen, landwirtschaftliche Fahrzeuge, Fahrzeuge für den Bau etc), Schiffe oder Flugzeuge.

Beim Transportmittel kann es sich insbesondere um ein motorisiertes Fahrzeug handeln, beispielsweise um eines der zuvor genannten. Dieses kann beispielsweise durch eine Bi-Fuel Verbrennungsmaschine angetrieben werden, welche von Benzin oder Diesel als ersten Kraftstoff und von einem von Benzin und (herkömmlichem) Diesel unterschiedlichen flüssigen oder gasförmigen Kraftstoff als zweiten Kraftstoff betreibbar ist. Mögliche Kraftstoffkombinationen sind beispielsweise Benzin und Autogas, Pflanzenöl und Diesel oder Biodiesel und Diesel. Es sind aber auch andere Kraftstoffkombinationen möglich, insbesondere Kombination aus den im Text nicht abschliessend aufgelisteten Brennstoffen.

Ergänzend kann es sich bei der Kraftmaschine, welche das motorisierte Fahrzeug antreibt, um eine Kraftmaschine mit einer Kraftstoff-Direkteinspritzung handeln.

Es auch möglich, dass die Kraftmaschine durch ein Gemisch aus erstem und zweitem Kraftstoff antreibbar ist.

Gemäß Anspruch 1 betrifft ein **zweiter erfindungsgemässer Aspekt** ein System zur Förderung eines flüssigen oder gasförmigen Brennstoffes, beziehungsweise Kraftstoffes, in einem Leitungssystem.

Das System eignet sich insbesondere, aber nicht nur, zum Einsatz in Kraftstoffanlagen für Kraftmaschinen, die auf einen Betrieb mit mindestens zwei verschiedenen Kraftstoffen umrüstbar sind. Beispiele solcher Kraftmaschinen sind wiederum Verbrennungskraftmaschinen, wie beispielsweise Verbrennungsmotoren oder Turbinen.

Eine Kraftstoffanlage, in welche das System gemäss zweitem Aspekt einbaubar ist, weist vor dem Einbau desselben eine Antriebseinheit auf.

Bei der Antriebseinheit im Sinne der Erfindung kann es sich insbesondere um eine Pumpe für ein Fluid, beispielsweise eine Kraftstoff-Hochdruckpumpe oder eine Ölpumpe handeln. Es ist aber auch möglich, dass es sich bei der Antriebseinheit um einen elektrischen oder mechanischen Antrieb handelt.

Die Kraftstoffanlage kann ferner ein Fluidreservoir und ein Leitungssystem aufweisen. Das Leitungssystem kann insbesondere dazu eingerichtet, das Fluid zu einem Eingang der Antriebseinheit und von einem Ausgang derselben zu weiteren Bauteilen der Kraftstoffanlage und/oder zur Kraftmaschine zu führen.

Das System zur Förderung eines flüssigen oder gasförmigen Brennstoffes weist auf:
- Ein Leitungssystem, in welchem ein Fluid und ein von diesem Fluid verschiedener Brennstoff führbar sind. Das Leitungssystem kann dabei sowohl Bereiche aufweisen, in welchen nur das Fluid beziehungsweise nur der Brennstoff geführt wird, als auch Bereiche, in denen Fluid und Brennstoff separat oder als Gemisch führbar sind.
- Mindestens einen Medienwandler, welcher dazu eingerichtet ist, den Brennstoff durch das Leitungssystem des Systems und gegebenenfalls durch das Leitungssystem der zuvor beschriebenen Kraftstoffanlage zu fördern.
- Einen Anschluss zu einer Antriebseinheit, wobei die Antriebseinheit dazu eingerichtet ist, das Fluid durch das Leitungssystem des Systems und der zuvor beschriebenen Kraftstoffanlage zu bewegen, insbesondere zu fördern, und wobei der Anschluss dazu eingerichtet ist, das Fluid dem Medienwandler zuzuführen.

Das Fluid kann auf unterschiedliche Arten von der Antriebseinheit zum Medienwandler gelangen, beispielsweise über einen serienmässigen Ausgang oder über einen, gegebenenfalls noch anzufertigenden, Anschluss an einen Verdichtungsraum der Antriebseinheit.

Ferner kann das Fluid die Funktion einer Hydraulikflüssigkeit einnehmen, welche insbesondere den Medienwandler nicht von einem Eingang zu einem Ausgang hin durchströmt, sondern sich beispielsweise in einer Druckleitung zwischen Antriebseinheit und Medienwandler hin- und her bewegt.

Ergänzend kann ein in das Leitungssystem des Systems oder der Kraftstoffanlage integriertes Umschaltventil dazu eingerichtet sein, das Fluid insgesamt, teilweise oder gar nicht dem Medienwandler zuzuführen. Dies ist insbesondere dann von Bedeutung, wenn das Fluid innerhalb der Kraftstoffanlage und/oder der Kraftmaschine eine weitere, vom Antrieb des Medienwandlers verschiedene Funktion, z.B. als Kraft- oder Schmierstoff, einnimmt. Beispielsweise können System und Umschaltventil so ausgelegt sein, dass jederzeit und kurzeitig, selbst unter Volllast der Kraftmaschine, zwischen einer Versorgung der Kraftmaschine mit Fluid und Brennstoff geschalten werden kann - vorausgesetzt die Kraftmaschine ist durch das Fluid betreibbar.

Das System gemäss zweitem Aspekt zeichnet sich dadurch aus, dass der Medienwandler ein auslenkbares Element aufweist. "Auslenkbar" bedeutet insbesondere, dass das Element lateral verschiebbar ist und/oder dass zumindest ein Teilbereich des Elements so deformierbar ist, dass der Teilbereich unterschiedliche räumliche Positionen einnehmen kann.

Insbesondere kann ein System gemäss zweitem Aspekt ein System zur Förderung eines Brennstoffes sein, aufweisend
- ein Leitungssystem, in welchem ein Fluid und ein von diesem Fluid verschiedener Brennstoff führbar sind;
- ein Medienwandler, welcher dazu eingerichtet ist, den Brennstoff durch das Leitungssystem zu fördern;
- einen Anschluss zu einer Antriebseinheit, wobei die Antriebseinheit dazu eingerichtet ist, das Fluid durch das Leitungssystem zu bewegen und wobei der Anschluss dazu eingerichtet ist, Fluid dem Medienwandler zuzuführen;
wobei, dass der Medienwandler ein auslenkbares Element, ein erstes Volumen für das Fluid ein zweites Volumen für den Brennstoff und eine erste Zuleitung, über welche das Fluid in das erste Volumen strömt, aufweist, dass das über die erste Zuleitung in das erste Volumen strömende Fluid einen Druck aufweist, der variiert, und dass der Medienwandler dazu eingerichtet ist, das im Druck variierende Fluid so in eine Auslenkung des auslenkbaren Elements zu übersetzten, dass eine Pumpwirkung auf den Brennstoff entsteht.

In einer Ausführungsform handelt es sich beim auslenkbaren Element um ein auslenkbares Trennelement, welches im Medienwandler das Fluid vom Brennstoff trennt.

In einer Ausführungsform handelt es sich bei dem auslenkbaren Element um eine Membran, welche in/an einer Umwandung des Medienwandlers befestigt ist, oder um einen Kolben, welcher führbar gelagert ist.

Das System gemäss zweitem Aspekt zeichnet sich ferner dadurch aus, dass der Medienwandler ein erstes Volumen für das Fluid, ein zweites Volumen für den Brennstoff und eine erste Zuleitung aufweist, über welche das Fluid in das erste Volumen strömen kann, wobei das in das erste Volumen einströmende Fluid einen Druck aufweist, der in Abhängigkeit der Zeit variiert, und dass der Medienwandler dazu eingerichtet ist, das im Druck variierende Fluid so in eine Auslenkung des auslenkbaren Elements zu übersetzten, dass eine Pumpwirkung auf den Brennstoff entsteht.

Der zeitliche Verlauf der Pumpwirkung (und somit der Förderwirkung) des Medienwandlers kann identisch sein mit dem zeitlichen Verlauf des Drucks des in den Medienwandler einströmenden Fluids.

Der zeitliche Verlauf der Pumpwirkung des Medienwandlers kann insbesondere für die Versorgung einer Kraftmaschine mit Brennstoff geeignet sein.

Der Medienwandler des Systems gemäss zweitem Aspekt ist durch das über den Anschluss zugeführte Fluid antreibbar. Insbesondere ist der Medienwandler so eingerichtet, dass er den gesamten Energiebedarf, welcher zur Förderung des Brennstoffes benötigt wird, aus dem über den Anschluss zugeführten Fluid beziehen kann.

In einer Ausführungsform beaufschlagt die Antriebseinheit selbst das Fluid mit dem zeitlich variierenden Druck, unter welchem das Fluid über die erste Zuleitung in den Medienwandler strömt. Dies ist beispielsweise dann der Fall, wenn es sich bei der Antriebseinheit um eine Kraftstoff-Hochdruckpumpe handelt.

In einer weiteren Ausführungsform sorgen mindestens ein zuleitungsseitiges Steuerventil und mindestens ein ableitungsseitiges steuerbares Ventil dafür, dass das über die erste Zuleitung in den Medienwandler strömende Fluid einen Druck aufweist, der variiert. Diese Ausführungsform kommt insbesondere dann zum Einsatz, wenn es sich bei der Antriebseinheit um eine Pumpe handelt, welche das Fluid mit einem konstanten Druck oder mit einem Druck beaufschlagt, dessen zeitliche Variation für die Versorgung des Medienwandler und/oder der Kraftmaschine mit Brennstoff ungeeignet ist. Ölpumpen sind ein Beispiel solcher Pumpen. Ferner kann diese Ausführungsform zum Einsatz kommen, wenn ein oder mehrere Medienwandler nicht im Takt der Antriebseinheit arbeiten sollen.

Ein System gemäss dieser alternativen Ausführungsform kann ferner eine Steuerung aufweisen, welche das Zusammenarbeiten der verschiedenen Ventile steuert. Insbesondere kann die Steuerung sicherstellen, dass der zeitliche Verlauf des Drucks des in den Medienwandlers einströmenden Fluids zu einer Pumpwirkung auf den Brennstoff führt, welche für die Versorgung einer Kraftmaschine mit Brennstoff geeignet ist.

In einer Ausführungsform ist das System in eine Kraftstoffanlage einbringbar, welche eine Kraftmaschine, die mit unterschiedlichen Kraftstoffen betreibbar ist, mit Kraftstoff versorgt. In dieser Ausführungsform kann ein erster zum Betrieb der Kraftmaschine geeigneter Kraftstoff zusätzlich als das zuvor beschriebene Fluid agieren, wobei ein zweiter zum Betrieb der Kraftmaschine geeigneter Kraftstoff der zuvor beschriebene Brennstoff ist.

In anderen Worten: Das System kann in eine Kraftstoffanlage einbringbar sein, welche eine Kraftmaschine, die mit unterschiedlichen Kraftstoffen betreibbar ist, mit Kraftstoff versorgt, wobei das Fluid ein erster Kraftstoff und der Brennstoff ein zweiter Kraftstoff ist.

Beim ersten und zweiten Kraftstoff handelt es sich insbesondere um den ersten und zweiten Kraftstoff gemäss erstem Aspekt.

In einer Ausführungsform trennt das auslenkbare Element das erste Volumen in einer flüssigkeits- und/oder gasdichten Art und Weise vom zweiten Volumen.

Ergänzend kann der Medienwandler neben der ersten Zuleitung eine erste Ableitung (ein erstes Zu-/Ableitungspaar) sowie eine zweite Zuleitung und eine zweite Ableitung (ein zweites Zu-/Ableitungspaar), aufweisen, wobei das erste Zu-/Ableitungspaar mit dem ersten Volumen und das zweite Zu-/Ableitungspaar mit dem zweiten Volumen verbunden ist.

"Verbunden sein" bedeutet in diesem Zusammenhang, dass das Fluid beziehungsweise der Brennstoff von der Zu-/Ableitung in das entsprechende Volumen und vom Volumen in die entsprechende Zu-/Ableitung strömen kann. Zusätzliche Bauteile wie Ventile oder Blenden können integriert sein, um das Strömen von Fluid und Brennstoff zu steuern und gegebenenfalls in eine oder beide Richtungen zu unterbinden.

Insbesondere kann das System dahingehend eingerichtet sein, dass das Fluid über die erste Zuleitung in das erste Volumen und der Brennstoff über die zweite Zuleitung in das zweite Volumen einbringbar sind. Dabei stehen das Fluid im ersten Volumen unter einem ersten Druck und der Brennstoff im zweiten Volumen unter einem zweiten Druck. Ferner kann der Medienwandler dazu eingerichtet sein, einen Druckunterschied zwischen erstem Druck und zweitem Druck zur Auslenkung des auslenkbaren Elements und zur Förderung des Brennstoffes im Leitungssystem und/oder zu einer Änderung des zweiten Drucks zu nutzten.

Insbesondere ist es die Antriebseinheit, welche das Fluid so mit Druck beaufschlagt, dass dieser im ersten Volumen unter besagtem ersten Druck steht.

Die Förderung des Brennstoffes im Leitungssystem und/oder die Änderung des zweiten Drucks beruhen insbesondere auf einer durch die zeitliche Variation des ersten Druckes verursachte Änderung des zweiten Volumens. Dabei ist die Änderung des zweiten Volumens insbesondere die Folge einer Auslenkung der Membran oder eines Verschiebens der Position des Kolbens.

Neben der Förderung eines flüssigen oder gasförmigen Brennstoffes, ist das System auch als Druck- und/oder Fördermengenwandler einsetzbar. Die unterschiedlichen Funktionen ergeben sich insbesondere aus der Bauweise des Medienwandlers sowie der Auslegung einer Steuerung, welche Medienwandler sowie im Leitungssystem eingebrachte Ventile und gegebenenfalls die Antriebseinheit steuert. Dabei sind insbesondere die Ansteuerzeiten und die Abmessungen des Medienwandlers von Bedeutung.

In einer Ausführungsform ist das erste Volumen des Medienwandlers durch ein erstes Profil senkrecht zu einer ersten Auslenkrichtung des auslenkbaren Elements sowie einer ersten räumlichen Ausdehnung parallel zur ersten Auslenkrichtung gegeben. Analog ist das zweite Volumen des Medienwandlers durch ein zweites Profil senkrecht zu einer zweiten Auslenkrichtung des auslenkbaren Elements sowie einer zweiten räumlichen Ausdehnung parallel zur zweiten Auslenkrichtung gegeben. Dabei entspricht die erste Auslenkrichtung der Auslenkrichtung des auslenkbaren Elements im Bereich des ersten Volumens und die zweite Auslenkrichtung der Auslenkrichtung des auslenkbaren Elements im Bereich des zweiten Volumens.

Ferner weist das auslenkbare Element gegen das erste Volumen hin eine erste Stirnfläche und gegen das zweite Volumen hin eine zweite Stirnfläche auf, wobei die erste Stirnfläche das erste Profil und die zweite Stirnfläche das zweite Profil hat.

Erstes und zweites Profil können nun eingerichtet sein, dass das System als Druck- und/oder Fördermengenwandler betreibbar ist. Dazu ist das Flächenverhältnis zwischen erster und zweiten Stirnfläche, beziehungsweise zwischen erstem und zweiten Profil, so gewählt ist, dass der zweite Druck höher als der erste Druck (Verhältnis grösser 1), oder dass der zweite Druck tiefer als der erste Druck (Verhältnis kleiner 1) ist.

Analog kann die Fördermenge des Brennstoffes erhöht (Flächenverhältnis zwischen erstem und zweitem Profil kleiner 1) oder reduziert (Verhältnis grösser 1) werden.

Diese Druck- und/oder Fördermengenwandler-Eigenschaften sind insbesondere auf die gewählte Antriebseinheit und die betriebene Kraftmaschine abgestimmt. Beispielsweise kann es bei der Verwendung einer Ölpumpe als Antriebseinheit nötig sein, den zweiten Druck zu erhöhen. Andererseits kann es beim Einbau des Systems gemäss zweitem Aspekt in eine Kraftstoffanlage für einen Bi-Fuel Verbrennungsmotor bei der Verwendung der Kraftstoff-Hochdruckpumpe des ersten Kraftstoffes (z.B. Benzin) nötig sein, das durch das System geförderte Volumen des zweiten Kraftstoffes (z.B. LPG) zu erhöhen.

Wird beispielsweise eine Bi-Fuel Kraftmaschine mit LPG (Brennstoff) und Benzin (Fluid) betrieben, so wird beim Verbrennungsprozess im LPG-Betrieb der Kraftmaschine eine um ca. 20% erhöhte Kraftstoff-Volumenmenge im Vergleich zum Betrieb der Kraftmaschine mit Benzin benötigt. Dieser Mehrbedarf kann durch den Betrieb des Systems als Druck- und/oder Fördermengenwandler wie oben beschrieben abgedeckt werden.

Um eine mit einer Erhöhung der Fördermenge einhergehenden Druckverminderung zu kompensieren, kann das System eine zusätzliche Vordruckpumpe aufweisen. Diese Vordruckpumpe ist insbesondere der zweiten Zuleitung (d.h. dem Eingang in das zweite Volumen) vorgeschaltet.

Alternativ kann der durch eine Brennstoff-Förderpumpe, die zum Fördern des Brennstoffs aus einem Brennstoffbehälter eingesetzt wird, generierte Förderdruck erhöht werden.

In beiden Fällen kann das System so eingerichtet sein, dass sich die durch den Medienwandler erzeugte Druckdifferenz und die mit der zusätzlichen Vordruckpumpe beziehungsweise mit der Brennstoff-Förderpumpe erzeugte Druckdifferenz im Wesentlichen addieren.

In Ausführungsformen ist der erste Druck zumindest zeitweise höher als der zweite Druck und der Druckunterschied zwischen erstem und zweitem Druck führt über eine Verringerung des zweiten Volumens zu einem Ausströmen des Brennstoffes aus dem zweiten Volumen und/oder dazu, dass der zweite Druck steigt.

In einer Ausführungsform ist die Antriebseinheit die Kraftstoff-Hochdruckpumpe des ersten Kraftstoffes, wobei die Kraftstoff-Hochdruckpumpe über eine Nockenwelle angetrieben wird. Dadurch weist der erste Druck sich wiederholende Druckspitzen aufweist.

Es sind insbesondere diese Druckspitzen, welche dazu führen, dass der erste Druck zumindest zeitweise höher ist als der zweite Druck. Allerdings kann der erste Druck auch insgesamt höher sein, als der zweite Druck.

Durch einen zeitlichen Verlauf des ersten Drucks, welcher sich wiederholende Druckspitzen und Druckminimas aufweist, kann Brennstoff periodisch in das zweite Volumen ein- und ausströmen. Dabei findet das Ausströmen über die zweite Ableitung, insbesondere in Richtung des Einspritzsystems, beziehungsweise Rail, der Kraftmaschine, in dessen Kraftstoffanlage das System eingebaut ist, statt. Das Einströmen geschieht über die zweite Zuleitung, welche beispielsweise mit einem Brennstoffbehälter für den Brennstoff verbunden ist.

In Abhängigkeit davon, wie die Kraftstoffanlage, in welche das System gemäss dem zweiten Aspekt eingebaut wird, ausgelegt ist, weist das System zusätzlich eine oder mehrere der folgenden Elemente auf:
- Einen Rücklauf, welcher die erste Ableitung des Medienwandlers mit einem Eingang der Antriebseinheit und/oder mit einem Fluidreservoir, welches in der Regel Teil der ursprünglichen Kraftstoffanlage ist, für die Aufbewahrung des Fluids verbindet.
- Ein steuerbares Ventil, welches den Fluss des Fluids über den Rücklauf regelt, wobei es sich beim steuerbaren Ventil um das bereits erwähnte ableitungsseitige steuerbare Ventil handeln kann.
- Einen Brennstoffbehälter für die Aufbewahrung des flüssigen oder gasförmigen Brennstoffes, welcher über die zweite Zuleitung mit dem Medienwandler verbunden ist. Der Brennstoffbehälter kann ferner eine Brennstöffförderpumpe zur Förderung des Brennstoffes vom Brennstoffbehälter in das Leitungssystem, beziehungsweise in das zweite Volumen aufweisen.
- Eine Kraftstoffanlage-Rücklaufleitung, welche die zweite Zuleitung mit dem Brennstoffbehälter verbindet.
- Ein zuleitungsseitiges Rückschlagventil, welches verhindert, dass Brennstoff aus dem Medienwandler über die zweite Zuleitung in Richtung des Brennstoffbehälters strömt.
- Eine Blende oder ein Druckregler, welche(r) dafür sorgt, dass überflüssiger, im Eingangsbereich des Medienwandlers befindlicher Brennstoff über die Kraftstoffanlage-Rücklaufleitung in den Brennstoffbehälter zurückgeführt wird. Blende, beziehungsweise Druckregler, und Kraftstoffanlage-Rücklaufleitung stellen ferner eine Rückführung von Brennstoff bei Kavitation im Eingangsbereich des Medienwandlers sicher.

Welche der oben genannten Elemente das System aufweist, hängt beispielsweise davon ab, ob die Kraftstoffanlage, in welche das System einbaubar ist, bereits ein Fluid und ein Brennstoff, beziehungsweise einen ersten Kraftstoff und einen zweiten Kraftstoff, befördert. Das heisst auch, dass das System je nachdem, ob es zum Umbau einer Kraftstoffanlage, zum Nachrüsten einer Kraftstoffanlage oder zur Ersteinrüstung beim Hersteller verwendet wird, mehr oder weniger Elemente aufweisen kann.

In Ausführungsformen, in welchen das System in eine Kraftstoffanlage zum Betrieb einer Kraftmaschine einbringbar ist, welche durch zwei oder mehr Kraftstoffe betreibbar ist, und in welchen ein erster Kraftstoff zusätzlich als Fluid agiert, ergeben sich analoge Elemente für Fluid und ersten Kraftstoff, beziehungsweise Brennstoff und zweiter Kraftstoff in naheliegender Weise. So kann beispielsweise in diesen Ausführungsformen das Fluidreservoir mit dem ersten Kraftstoffbehälter und der Brennstoffbehälter mit dem zweiten Kraftstoffbehälter identisch sein.

Ferner kann in solchen Ausführungsformen das besagte Umschaltventil, dazu eingerichtet ist, die Zufuhr des ersten Kraftstoffes (Fluids) einerseits zum Medienwandler und andererseits zum Einspritzsystem zu steuern. Dazu kann das Umschaltventil als 3/2-Wegevetil realisiert sein.

In einer Ausführungsform weist das System mindestens zwei, beispielsweise 2, 3, 4, 5 oder mehr Medienwandler auf, welche so zusammenarbeiten, dass ein oder mehrere für die Förderung des Brennstoffes charakteristische Kennwerte veränderbar sind. Bei den Kennwerten handelt es sich beispielsweise um den zeitlichen Verlauf des Druckes und/oder der Fördermenge, insbesondere um die Taktung von auftretenden Druck- und/oder Fördermengenmaximas. Weitere Kennwerte sind beispielsweise der maximale Druck, unter welchem der Brennstoff durch die Medienwandler gefördert wird, oder die Fördermenge pro Zeiteinheit oder Förderzyklus.

In einer Ausführungsform weist das System zwei Medienwandler auf, welche parallel geschalten sind und zueinander asynchron arbeiten. Das heisst, dass sich die jeweils einen auslenkbaren Elemente der Medienwandler nicht in Phase zueinander bewegen. Die auslenkbaren Elemente der Medienwandler können sich insbesondere gegenläufig zueinander bewegen.

Falls das System zwei Medienwandler aufweist, bewegt sich das auslenkbare Element eines ersten Medienwandlers insbesondere gegenläufig zum auslenkbaren Element eines zweiten Medienwandlers.

Zwei Medienwandler, die gegenläufig arbeiten, können auch durch einen Hydraulikblock realisiert sein, der einen ersten Blockteil, einen zweiten Blockteil und einen dritten Blockteil aufweist.

In einer Ausführungsform, weisen der erste und zweite Blockteil jeweils zwei Kammern (nachfolgend linke und rechte Kammer des ersten beziehungsweise zweiten Blockteils genannt) auf, die durch jeweils einen Teilbereich des auslenkbaren Elements getrennt sind.

Insbesondere weist das auslenkbare Element einen ersten Kolben, einen zweiten Kolben und eine Kolbenverbindung auf. Die Kolbenverbindung bildet eine starre Verbindung zwischen erstem und zweitem Kolben. Das heisst, dass eine Bewegung des ersten Kolbens zu einer gleichgerichteten Bewegung des zweiten Kolbens führt und umgekehrt.

Der erste Kolben trennt die linke Kammer des ersten Blockteils von der rechten Kammer des ersten Blockteils und der zweite Kolben trennt die linke Kammer des zweiten Blockteils von der rechten Kammer des zweiten Blockteils.

Der dritte Blockteil trennt den ersten Blockteil vom zweiten Blockteil. Insbesondere trennt er die linke Kammer des ersten Blockteils von der rechten Kammer des zweiten Blockteils.

Ferner kann der dritte Blockteil eine Führung für die Kolbenverbindung entlang einer Längsachse des Hydraulikblocks bilden. In diesem Fall entspricht die gleichgerichtete Bewegung des ersten und zweiten Kolbens einer gleichläufigen Bewegung entlang dieser Längsachse.

In dieser Ausführungsform entspricht die linke Kammer des ersten Blockteils dem erste Volumen eines ersten Medienwandlers, die rechte Kammer des zweiten Blockteils dem zweite Volumen des ersten Medienwandlers, die rechte Kammer des ersten Blockteils dem ersten Volumen eines zweiten Medienwandlers und die linke Kammer des zweiten Blockteils dem zweite Volumen des zweiten Medienwandlers. Entsprechend kann ein Blockteil für das Fluid und ein Blockteil für den Brennstoff eingerichtet sein.

Jede der vier Kammern kann je eine Zu- und eine Ableitung aufweisen, wobei die Zuleitungen zu den beiden Kammern des ersten Blockteils ein gemeinsames oder je ein erstes Kammer-Zuleitungsventil und die Ableitungen der beiden Kammern des ersten Blockteils ein gemeinsames oder je ein erstes Kammer-Ableitungsventil aufweisen.

Beim gemeinsamen Kammer-Zuleitungsventil, beziehungsweise beim gemeinsamen Kammer-Ableitungsventil kann es sich um ein 3/2-Wegeventil, insbesondere ein 3/2-Wege-Magnetventil, handeln.

Unabhängig davon, ob das System zur Förderung des Brennstoffes über einen oder mehrere, beispielsweise zwei, Medienwandler verfügt, kann das System einen Sensor aufweisen, der so angeordnet ist, dass er eine bestimmte, beispielsweise extremale, Auslenkung des auslenkbaren Elements feststellen kann.

Beim Sensor kann es sich insbesondere um einen REED-Kontakt, Hallgeber (Hallsensor) o.ä. handeln.

Die Schaltung des ersten Kammer-Zuleitungsventils oder der ersten Kammer-Zuleitungsventils und/oder des ersten Kammer-Ableitungsventils oder der ersten Kammer-Ableitungsventile kann direkt oder über die Steuerung durch besagten Sensor ausgelöst werden.

Je nach Anordnung des Systems relativ zur Kraftmaschine kann sich der Medienwandler mehr oder weniger erwärmen. Diese Erwärmung basiert beispielsweise auf einem Wärmeeintrag durch Fluid (beispielsweise Benzin), das im und/oder am Motor erwärmt wird.

Eine Erwärmung des Medienwandlers kann sich negativ auf den Betrieb desselben auswirken. Beispielsweise kann eine solche Erwärmung den Dampfdruck im zweiten Volumen soweit erhöhen, dass dieser den Förderdruck des Brennstoffes übersteigt, was ein ausreichendes Nachfliessen von Brennstoff in den Medienwandler und somit eine ausreichende Versorgung der Kraftmaschine mit zweitem Brennstoff verhindern kann.

Um eine zu starke Erwärmung des Medienwandlers zu verhindern, kann eine Umwandung des Medienwandlers mindestens eine Kühlbohrung aufweisen. Bei der Umwandung kann es sich beispielsweise um eine Umwandung des Hydraulikblocks oder um eine Umwandung zumindest eines der drei Blockteile handeln.

Die Kühlbohrung kann über ein Bypass-Ventil und eine Blende und/oder eine Düse versorgt werden.

Die Blende und/oder Düse bewirkt, dass der (flüssige) Brennstoff vor der Blende/Düse, das heisst vor dem Eintritt in die Kühlbohrung, unter einem höheren Druck steht als hinter der Blende/Düse. Dadurch kann der Brennstoff innerhalb der Kühlbohrung verdampfen und der Umwandung Wärme entziehen, wodurch der Medienwandler gekühlt wird.

Die Kühlbohrung kann tunnelartig ausgelegt sein und sich über ein Gebiet der Umwandung erstrecken.

Ein Ausgang der Kühlbohrung kann dem Brennstoffbehälter verbunden sein, so dass rücklaufender Brennstoff dem Brennstoffbehälter zugeführt wird.

Die mindestens eine Kühlbohrung ist insbesondere so angeordnet, dass der Brennstoff-Teil des Medienwandlers gekühlt wird.

Die Kühlleistung kann durch die Blende und/oder Düse geregelt werden, insbesondere durch eine Regelung der durch die Blende und/oder Düse strömenden Menge an Brennstoff.

Für die Kühlbohrungen können beispielsweise Bohrungen von Befestigungsschrauben verwendet werden, wie sie auch für den Zusammenhalt verschiedener Teile des Medienwandlers verwendet werden.

Die verschiedenen Teile können beispielsweise einen Fluid-Teil und den Brennstoffteil umfassen. Insbesondere können sie die oben erwähnten drei Blockteile des Hydraulikblockes umfassen.

Die Bohrungen können vergrössert, das heisst verbreitert und/oder verlängert, sein.

Die Bohrungen können ein Gewinde aufweisen.

Sowohl das Vorhandensein eines Gewindes als auch eine Vergrösserung der Bohrung führen zu einer Oberflächenvergrösserung der Kühlbohrung und somit zu einer erhöhten Wärmeaufnahme des (gasförmigen) Brennstoffes.

Ein zusätzlicher, dritter Medienwandler kann beispielsweise dazu eingerichtet sein, beim Umschalten zwischen erstem zu zweitem Medienwandler auftretende Leistungsabfälle zu überbrücken.

Alternativ können Druckeinbrüche, die beim Umschalten der Förderrichtung entstehen, beispielsweise durch eine der folgenden Massnahmen verhindert oder zumindest gemindert werden:
- Das System weist zusätzlich einen Ausgleichs-Druckspeicher auf, der dem Medienwandler nachgeschaltet und dem Einspritzsystem vorgeschaltet ist. Insbesondere kann der Ausgleichs-Druckspeicher so angeordnet sein, dass er sowohl mit unter Hochdruck stehendem Brennstoff als auch mit unter Hochdruck Fluid befüllbar ist.
- Insbesondere bei Systemen mit zwei gegenläufig arbeitenden Medienwandler können die zu- und ableitungsseitigen Ventile, welche das Ein- und Ausströmen von Fluid in den Medienwandler regeln, so geschaltet werden, dass beim Medienwandler mit dem ausgelenkten Element kurzfristig sowohl die Fluidzuleitung als auch die Fluidableitung geschlossen ist.
- In Systemen, die ferner den Druckspeicher gemäss erstem Aspekt aufweisen, können die Druckeinbrüche auch über das Ablassen von Fluid oder Brennstoff, das/der im Druckspeicher gespeichert ist, verhindert oder zumindest gehindert werden.

Die Verminderung oder Verhinderung von solchen Druckeinbrüchen löst insbesondere das Problem, dass eine allenfalls vorhandene Kraftmaschinensteuerung, insbesondere die Motorsteuerung bei Fahrzeugen, einen Systemfehler meldet, wenn ein System gemäss zweitem Aspekt in irgendeiner Ausführungsform in ein Antriebsaggregat, insbesondere in das Antriebsaggregat eines Fahrzeug, eingebaut wird.

Das System kann ferner eine Steuerung aufweisen, welche eines oder mehrere Ventile des Systems steuert und gegebenenfalls mit einer kraftmaschinenseitigen Steuerung, über welche in der Regel die ursprüngliche Kraftstoffanlage gesteuert wird, interagiert. Die Steuerung regelt beispielsweise das/ein steuerbare(s) Ventil und/oder das/ein Steuerventil und/oder das Umschaltventil.

Die Steuerung kann ein Element umfassen, das dazu eingerichtet ist, eine Auslenkung des auslenkbaren Elements festzustellen. Besagtes Element kann beispielsweise ein REED-Kontakt oder Hallgeber (Hallsensor) sein.

Insbesondere kann das Element eine maximale Auslenkung des auslenkbaren Elements feststellen und die Steuerung dazu eingerichtet sein, die zu- und ableitungsseitigen Ventile des Medienwandlers so zu schalten, dass eine Förderung des Brennstoffes auf zumindest eine der beschriebenen Weise stattfindet.

In einer Ausführungsform sind die zu- und ableitungsseitigen Ventile des Medienwandlers hydraulisch so schaltbar, dass eine Förderung des Brennstoffes auf zumindest eine der beschriebenen Weise stattfindet. Dies ermöglicht einen mechanischen Betrieb des Systems, beziehungsweise ein mechanisches Umschalten des Medienwandlers, wodurch die Anzahl benötigter elektrischer Bauteile, wie beispielsweise elektrisch schaltbarer Ventile und Sensoren, reduziert werden kann.

Dazu können mechanisch, beispielsweise mit einer Feder, vorgespannte Ventile in die das erste und zweite Volumen definierende Wandung eingebracht sein.

Die mechanisch vorgespannten Ventile können so angeordnet und eingerichtet sein, dass sie beispielsweise bei maximaler Auslenkung des auslenkbaren Elements öffnen beziehungsweise schliessen.

Bei einer Auslenkung entlang einer Achse gibt es insbesondere zwei maximale Auslenkungen. Diese können durch je einen Anschlag definiert sein.

Ergänzend kann die Ausführungsform mit hydraulisch schaltbaren Ventilen einen Druckpuffer, beispielsweise in Form eines Speicherkolbens, aufweisen. Der Druckpuffer kann dazu eingerichtet sein, beim Schalten auftretende Druckabfälle zu kombinieren.

Ein Druckpuffer ist insbesondere bei Systemen mit Doppel-Medienwandler mit gegenläufig arbeitenden Medienwandlern interessant, da dadurch die Druckabfälle, die beim Umschalten der Brennstoff-Förderung durch den ersten Medienwandler auf Brennstoff-Förderung durch den zweiten Medienwandler und umgekehrt auftreten, reduziert oder gar eliminiert werden können.

Solche Druckabfälle treten insbesondere bei der Ausführungsform mit hydraulisch schaltbaren Ventilen auf, da in diesem Fall die Umschaltung nicht durch die Antriebseinheit, beispielsweise die Hochdruckpumpe beziehungsweise die Nockenstellung, geregelt werden kann.

In einer Ausführungsform verfügt das System über eine Bedienkonsole und die Steuerung ist dazu eingerichtet, mindestens einen Betriebsparameter des Systems zu erfassen.

Der erfasste Betriebsparameter kann zur Festlegung eines Betriebszustands verwendet werden.

Die Steuerung kann eingerichtet sein den mindestens einen Betriebsparameter (oder den sich daraus ergebenden Betriebszustand) an die Bedienkonsole zu übermitteln. Dazu verfügen Steuerung und Bedienkonsole über ein Kommunikationsmodul. Über dieses können Steuerung und Bedienkonsole eine, allenfalls drahtlosen, Kommunikationsverbindung zueinander aufbauen.

Die Kommunikationsmodule können Bluetooth-fähig sein.

Das Kommunikationsmodul der Steuerung und/oder das Kommunikationsmodul der Bedienkonsole kann ferner dazu eingerichtet sein, mit einer mobilen Vorrichtung, insbesondere mit einem Mobiltelefon oder Tablet, zu kommunizieren. In diesem Fall können ein oder mehrere Betriebsparameter über eine auf der mobilen Vorrichtung ausgeführten App veränderbar sein. Es ist auch denkbar, dass eine, mehrere oder alle nachfolgend beschriebenen Funktionen der Bedienkonsole durch die mobile Vorrichtung ausgeführt werden. In diesem Fall kann allenfalls sogar auf die nachfolgend beschriebene Bedienkonsole verzichtet werden.

Die Bedienkonsole kann eingerichtet sein, übermittelte Betriebsparameter (Betriebszustände) anzuzeigen und über die Bedienkonsole eingegebene Befehle an die Steuerung weiter zu leiten. Die Weiterleitung der Befehle kann über die genannte Kommunikationsverbindung erfolgen. Zur Anzeige der übermittelten Betriebsparameter (Betriebszustände) kann die Bedienkonsole ein Anzeigeelement, wie beispielsweise einen Bildschirm oder LEDs etc. aufweisen.

Die Bedienkonsole kann Eingabeelemente, wie beispielsweise einen Touchscreen, Knöpfe oder einen Drehregler, aufweisen, über die Befehle durch den Benutzer eingebbar sind.

Zur Erfassung des mindestens einen Betriebsparameters kann die Steuerung Sensoren aufweisen und/oder auf solche zugreifen.

Die Übermittelung des mindestens einen Betriebsparameters (Betriebszustands) an die Bedienkonsole und/oder dessen Anzeige auf der Bedienkonsole und/oder die Weiterleitung eines Befehls von der Bedienkonsole an die Steuerung kann eine Berechtigungsauthentifizierung voraussetzen.

Beispielsweise kann die Bedienkonsole zwei Konsolen-Betriebszustände aufweisen. Ein erster Konsolen-Betriebszustand ist auf einen einfachen Benutzer, das heisst einen Benutzer, der beispielsweise keine Unterhalts-, Prüf- und/und Aktualisierungsaufgaben hat, ausgerichtet. Im ersten Konsolen-Betriebszustand werden nur grundlegende Betriebsparameter (Betriebszustände) angezeigt und es sind nur grundlegende Befehle eingebbar.

Eine Bedienkonsole der eben beschriebenen Art kann auch bei einem System gemäss erstem Aspekt in irgendeiner Ausführungsform zum Einsatz kommen. Insbesondere kann ein System gemäss erstem Aspekt die Bedienkonsole und gegebenenfalls eine entsprechend ausgelegte Steuerung und entsprechende Kommunikationsmodule aufweisen.

Bei den grundlegenden Betriebsparametern (Betriebszuständen) kann es sich beispielsweise um die Anzeige handeln, ob momentan der Brennstoff oder das Fluid zu einem Ausgang des Systems geförderten wird, oder um den Füllstand im Brennstoffbehälter, im Fluid-Reservoir und/oder im Druckspeicher gemäss erstem Aspekt.

Bei den grundlegenden Befehlen kann es sich beispielsweise um das Ein-/Ausschalten des Systems, die Initiierung eines Systemtests oder die Wahl, ob der Brennstoff oder das Fluid zu einem Ausgang des Systems geförderten werden soll, handeln.

Ein zweiter Konsolen-Betriebszustand kann auf einen sachkundigen Benutzer, wie beispielsweise einen Servicetechniker, ausgelegt sein. Im zweiten Konsolen-Betriebszustand können weitergehende Betriebsparameter angezeigt werden und kann die Möglichkeit bestehen, über die Bedienkonsole auf Bauteile des Systems zuzugreifen.

Beispielsweise kann im zweiten Betriebszustand der Ausfall eines Bauteils, die Abnutzung eines Bauteils, aber auch der Druck und/oder die Temperatur an bestimmten Stellen im System angezeigt werden.

Die Anzeige zumindest der weitergehenden Betriebsparameter (Betriebszustände) kann über einen reduzierten Fehlercode erfolgen.

Die Anzeige von Betriebsparametern (Betriebszuständen) kann auf verhältnismässig einfache Weise erfolgen. Beispielsweise kann sie in Form von blinkenden LEDs erfolgen. Bei den blinkenden LEDs kann es sich um diejenigen LEDs handeln, die zur Anzeige der grundlegenden Betriebsparameter verwendet werden.

Beispielsweise kann die Bedienkonsole fünf LEDs umfassen. In diesem Fall stehen 120 Leuchtkombinationen zur Anzeige von Betriebsparametern

Solche blinkenden LEDs sind ein Beispiel eines reduzierten Fehlercodes.

Ein Übergang der Bedienkonsole vom ersten Konsolen-Betriebszustand in den zweiten Konsolen-Betriebszustand kann insbesondere die genannte Berechtigungsauthentifizierung voraussetzen. Diese kann beispielsweise die Eingabe oder Übermittlung eines Codes, eine bestimmte Betätigungsabfolge eines oder mehrerer Eingabeelemente oder das Anbringen eines mechanischen und/oder elektronischen Schlüssels umfassen.

Die Bedienkonsole kann in ein Transportmittels, beispielsweise ein Fahrzeugs, so einbaubar sein, dass ein Benutzer während des Bedienens des Transportmittels gut auf die Bedienkonsole zugreifen kann.

Die Bedienkonsole kann beispielsweise im Innenraum des Transportmittels und/oder auf einem Armaturenbrett angeordnet sein.

Die Bedienkonsole kann über eine im Transportmittel vorhandene Stromquelle, beispielsweise einen Zigarettenanzünder oder ein USB-Schnittstelle, mit Strom versorgbar sein.

Ferner kann die Bedienkonsole neben den zuvor genannten Bauteilen und Eigenschaften einen An/Aus-Schalter zur Förderung des Brennstoffs an einen Ausgang des Systems und/oder LED-Elemente zur Statusanzeige (z.B. Füllstande und/oder Fehlermeldung und/oder Warnmeldungen) und/oder eine oder mehrere Steckdosen, z.B. USB-Steckdosen, zum Laden von elektrischen Geräten aufweisen.

Insbesondere kann es sich beim Brennstoff um LPG handeln, wobei über den An/Aus-Schalter eingestellt werden kann, ob eine Kraftmaschine, die über das System mit Kraftstoff versorgt wird, mit LPG oder einem anderen Kraftstoff, insbesondere Benzin, versorgt wird.

In einer Ausführungsform ist das System so eingerichtet, dass es einen Diebstahlschutz umfasst. Dazu weist es einen Empfänger, einen tragbaren Sender und eine Steuerung auf.

Die Steuerung kann dazu eingerichtet sein, die für den Diebstahlschutz nötigen Funktionen zusätzlich zu bereits genannten Funktionen der Steuerung auszuführen.

Der Empfänger kann Teil eines der zuvor genannten Kommunikationsmodule sein.

Der Diebstahlschutz ist dadurch realisiert, dass die Steuerung die Ventile des Systems so schaltet, dass der von der Brennstoff-Förderpumpe aus dem Brennstoffbehälter geforderter Brennstoff und das von einer Fluid-Förderpumpe aus dem Fluid-Reservoir geförderte Fluid in den Brennstoffbehälter beziehungsweise in das Fluid-Reservoir zurückbefördert, wenn der Empfänger nicht mit dem tragbaren Sender in Kontakt steht.

Steht beispielsweise der tragbare Sender nach einem Start der Kraftstoffanlage oder der Kraftmaschine, in welche das System eingebaut ist, nicht in Kommunikation mit dem Empfänger, so kann die Steuerung das Umschaltventil, welches festlegt, ob Fluid (z.B. Benzin), das von der Antriebseinheit (z.B. Hochdruckpumpe) gefördert wird, zum Ausgang des Systems (und somit zum Einspritzsystem) oder zum Eingang des Medienwandlers geführt wird, so schalten, dass das Fluid zum Medienwandler geführt wird. Gleichzeitig kann die Steuerung ein zuleitungsseitiges Steuerventil (falls vorhanden) sowie das dazugehörige ableitungsseitige Steuerventil so schalten, dass diese Ventile offen sind. Dadurch fliesst das Fluid durch das erste Volumen in Richtung Fluid-Reservoir zurück, ohne dass eine Pumpwirkung auf den Brennstoff erzeugt wird. In anderen Worten: Weder Fluid noch Brennstoff gelangen zu einem mit dem Einspritzsystem der Kraftmaschine verbundenen Ausgang des Systems.

Alternative Ausführungsformen des Diebstahlschutzes sind denkbar. So kann beispielsweise ein Brennstoff-Rücklauf so geschaltet werden, dass durch den Medienwandler geförderter Brennstoff in den Brennstoffbehälter statt Richtung Einspritzsystem der Kraftmaschine gefördert wird.

Die konkrete Realisierung des Diebstahlschutzes hängt von der Ausführungsform des Systems ab.

In einem System mit zwei Medienwandler, die gegenläufig arbeiten und als Hydraulikblock wie zuvor beschrieben realisiert sind, kann der Diebstahlschutz beispielsweise wie folgt sein:
Falls der tragbare Sender nach einem Start der Kraftstoffanlage oder der Kraftmaschine, in welche das System eingebaut ist, nicht in Kommunikation mit dem Empfänger steht, stellt die Steuerung sicher, dass das Umschaltventil das Fluid (z.B. Benzin) zum ersten Blockteil fördert. Gleichzeitig werden das erste Kammer-Zuleitungsventil und das erste Kammer-Ableitungsventil gegensätzlich bestromt. Dadurch fährt das auslenkbare Element bis zum Anschlag auf eine Seite und der Kraftstoff fliesst durch die entsprechende Kammer des ersten Blocks und wird in dem Rücklauf zum Fluid-Reservoir gefördert.

Eine Förderung des Brennstoffs kann dann durch das Nicht-Ansteuern des ersten Kammer-Zuleitungsventil (oder des ersten Kammer-Ableitungsventils) verhindert werden.

Das vom tragbaren Sender ausgesendete Signal ist insbesondere von solch kurzer Reichweite, dass der tragbare Sender (unter Berücksichtigung allfälliger Abschirmungen) innerhalb eines Radius von wenigen Metern, beispielsweise innerhalb eines Radius von 3 Metern, vom Empfänger entfernt sein muss, damit das System die Ventile nicht so schaltet, dass weder Brennstoff noch Fluid an einen Ausgang des Systems gefördert wird, wodurch die Versorgung einer Kraftmaschine, welche unter Verwendung des Systems mit Kraftstoff versorgt wird, eingestellt würde.

Alternativ oder ergänzend kann ein direkter oder indirekter physikalischer Kontakt zwischen tragbarem Sender und Empfänger nötig sein. Dieser Kontakt kann durch das Ablegen oder Anbringen des Senders an einer mit dem Empfänger über einen Leiter verbundenen Ablagefläche herstellbar sein.

Der tragbare Sender kann ergänzend zu einem Sender, wie er insbesondere in smart keys für schlüssellose Zugangs- und Startsysteme eingesetzt wird, einsetzbar sein.

Beim tragbaren Sender kann es sich um eine mobile Vorrichtung, insbesondere um die zuvor genannte mobile Vorrichtung, die mit der Steuerung und/oder der Bedienkonsole kommunizieren kann, handeln. Insbesondere (aber nicht nur) in diesem Fall kann ein Schalten der Ventile, so dass Brennstoff oder Fluid an einen Ausgang des Systems gefördert wird, von der Eingabe eines Codes, beispielsweise in der zuvor genannten App, abhängen. Es ist auch denkbar, dass auf eine unmittelbare Eingabe des Codes zu Gunsten einer personalisierten App verzichtet werden kann.

Alternativ kann besagter Code kann auch an der Bedienkonsole eingegeben werden.

Ein System gemäss irgendeiner Ausführungsform des zweiten Aspekts, das zusätzlich als Diebstahlschutz eingerichtet ist, kann somit das Problem lösen, dass Fahrzeuge, deren Entriegelung und deren in-Betriebnahme nur an eine drahtlose Kommunikation zwischen Sender und fahrzeugseitigem Empfänger gebunden ist, einfach zu entwenden sind.

Dieses Problem wird mit dem beschriebenen System insbesondere dadurch gelöst, dass das Vorhandensein der Kommunikation zwischen tragbarem Sender und dem systemseitigen Empfänger eine Voraussetzung ist, dass Kraftstoff der Kraftmaschine des Fahrzeugs zugeführt wird. Davon abgesehen erfüllt die Kommunikation zwischen tragbarem Sender und systemseitigen Empfänger keine weitere Funktion, sodass besagte Kurzreichweitigkeit ausreichend ist. Smart keys gemäss dem Stand der Technik können keine solche Kurzreichweitigkeit aufweisen, da sie beispielsweise auch als Teil des Zugangssystems eingesetzt werden. Ferner kommunizieren Smart keys gemäss dem Stand der Technik nicht mit Bauteilen der Kraftstoffanlage oder der Kraftmaschine.

Das System gemäss zweitem Aspekt in einer der beschriebenen Ausführungsformen kann das kennzeichnende Element einer Kraftstoffanlage sein, welche das Fluidreservoir für ein Fluid, einen Brennstoffbehälter für einen gasförmigen oder flüssigen Brennstoff, eine Antriebseinheit und ein Leitungssystem aufweist.

In Ausführungsformen, in welchen die Kraftstoffanlage zum Betrieb einer Kraftmaschine dient, welche durch zwei oder mehr Kraftstoffe betreibbar ist, und in welchen ein erster Kraftstoff zusätzlich als Fluid agiert, kann ferner der erste Kraftstoffbehälter (Fluidreservoir) über das Leitungssystem mit einem Eingang der Antriebseinheit und ein Ausgang der Antriebseinheit über das Leitungssystem mit einem Einspritzsystem der Kraftmaschine verbunden. In einer Kraftstoffanlage, welche das System gemäss zweitem Aspekt in einer der beschriebenen Ausführungsformen aufweist, kann die Antriebseinheit eine Kraftstoff-Hochdruckpumpe sein, welche insbesondere durch die Kraftmaschine, die durch die Kraftstoffanlage mit Kraftstoff versorgt wird, angetrieben wird.

In den besagten Ausführungsformen mit einem als Fluid agierenden ersten Kraftstoff, kann es sich bei der Kraftstoff-Hochdruckpumpe insbesondere um die Kraftstoff-Hochdruckpumpe des ersten Kraftstoffes handeln, wobei der erste Kraftstoff derjenige ist, durch welchen die Kraftmaschine vor dem Umbau auf eine Bi-Fuel Kraftmaschine betrieben wurde.

Die Kraftstoffanlage kann beispielsweise in Personenwagen, Lastwagen, landwirtschaftliche Fahrzeugen, Schiffen oder Flugzeugen, aber auch stationäre Maschinen wie beispielsweise Stromerzeuger, Pumpen und Antriebe zum Einsatz kommen.

Die Kraftstoffanlage, beziehungsweise das System gemäss zweitem Aspekt in einer der beschriebenen Ausführungsformen, kann insbesondere kennzeichnendes Teil eines Antriebsaggregats sein, welches ferner eine Kraftmaschine aufweist.

Beim Antriebsaggregat handelt es sich beispielsweise um eine stationäre oder mobile Maschine mit Verbrennungsmotor, einen Stromerzeuger, oder einen Antrieb für eine stand-alone arbeitende Vorrichtung.

Ferner kann das Antriebsaggregat, beziehungsweise die Kraftstoffanlage oder das System gemäss zweitem Aspekt in einer der beschriebenen Ausführungsformen ein Transportmittel kennzeichnen. Beispiele solcher Transportmittel sind Fahrzeuge (Personenwagen, Lastwagen, landwirtschaftliche Fahrzeuge, Fahrzeuge für den Bau etc.), Schiffe oder Flugzeuge.

Beim Transportmittel kann es sich insbesondere um ein motorisiertes Fahrzeug handeln, beispielsweise um eines der zuvor genannten. Dieses kann beispielsweise - wie vorgängig und nachfolgend beschrieben - durch eine Bi-Fuel Verbrennungsmaschine angetrieben werden.

Letztlich kann sich eine Kraftstoffanlage, ein Antriebsaggregat, ein Transportmittel oder ein motorisiertes Fahrzeug auch dadurch kennzeichnen, dass es sowohl ein System zum Austausch von unterschiedlichen, zum Betrieb einer Kraftmaschine verwendbare Kraftstoffe gemäss erstem Aspekt als auch ein System zur Förderung eines flüssigen oder gasförmigen Brennstoffes gemäss zweitem Aspekt aufweist.

Die Erfindung betrifft ein Verfahren zur Versorgung einer Kraftmaschine mit Brennstoff gemäß Anspruch 16.

Nachfolgend werden Ausführungsbeispiele anhand von Figuren beschrieben. In den Figuren bezeichnen gleiche Bezugszeichen gleiche oder analoge Elemente. Es zeigen:
- Fig. 1: Eine schematische Darstellung einer Kraftstoffanlage mit einem eingebauten System gemäss einem ersten, nicht erfindungsgemässen Aspekt, wobei die Kraftstoffanlage einen Vierzylinder-Verbrennungsmotor mit Kraftstoff-Direkteinspritzung versorgt;
- Fig. 2: Eine schematische Darstellung der Kraftstoffanlage gemäss Figur 1 mit einem alternativen System gemäss dem ersten Aspekt;
- Fig. 3: Eine schematische Darstellung einer zweiten Kraftstoffanlage mit einem eingebauten System gemäss dem ersten Aspekt, wobei die Kraftstoffanlage wiederum einen Vierzylinder-Verbrennungsmotor mit Kraftstoff-Direkteinspritzung versorgt;
- Fig. 4: Eine schematische Darstellung einer Kraftstoffanlage mit einem eingebauten System gemäss einem zweiten, die Erfindung umfassenden Aspekt, wobei die Kraftstoffanlage einen Vierzylinder-Verbrennungsmotor mit Kraftstoff-Direkteinspritzung versorgt
- Fig. 5: Eine schematische Darstellung eines Medienwandlers, der zusätzlich als Druck- und Fördermengenwandler arbeitet;
- Fig. 6: Eine schematische Darstellung einer alternativen Ausführungsform einer Kraftstoffanlage mit einem eingebauten System gemäss zweitem Aspekt, welches zwei Medienwandler aufweist;
- Fig. 7: Eine schematische Darstellung einer Kraftstoffanlage mit einem eingebauten Doppel-Medienwandlers mit zwei Fronten;
- Fig. 8: Eine schematische Darstellung einer nicht erfindungsgemässen weiteren alternativen Ausführungsform einer Kraftstoffanlage mit einem eingebauten System gemäss zweitem Aspekt;
- Fig. 9: Eine schematische Darstellung einer weiteren alternativen Ausführungsform einer Kraftstoffanlage mit einem eingebauten System gemäss zweitem Aspekt;
- Fig. 10: Eine schematische Darstellung eines Systems gemäss zweitem Aspekt, das einen als Hydraulikblock realisierten Doppel-Medienwandler umfasst;
- Fig. 11: Eine schematische Darstellung eines Systems gemäss zweitem Aspekt, das hydraulisch betrieben wird.

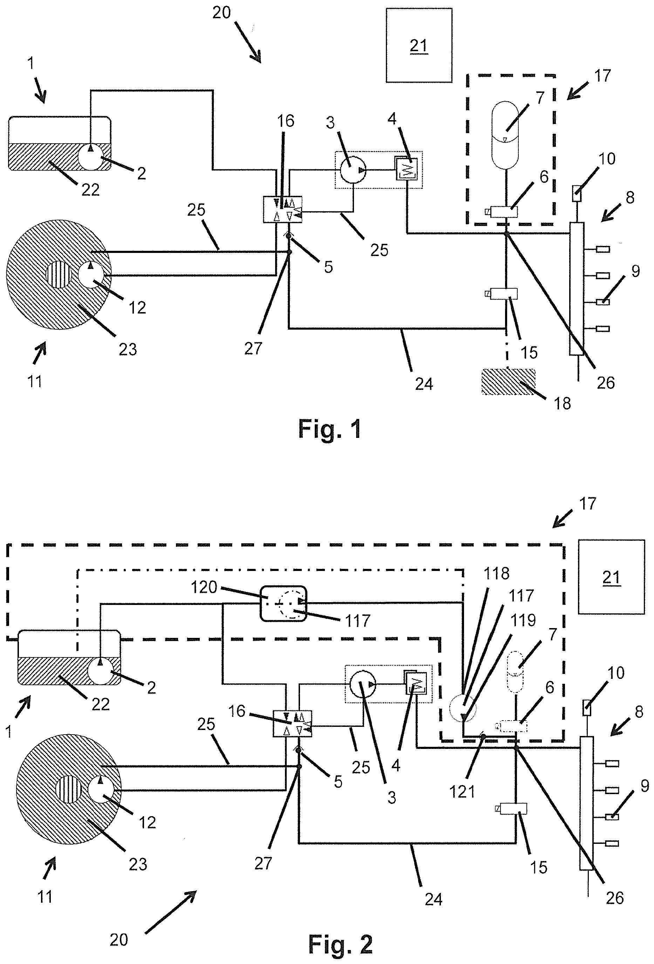

**Figur 1** zeigt eine schematische Darstellung einer Kraftstoffanlage 20 mit einem eingebauten System gemäss einem ersten, nicht erfindungsgemässen Aspekt. Bei der Kraftmaschine, die über die Kraftstoffanlage 20 mit Kraftstoff versorgt wird, handelt es sich um einen Vierzylinder-Verbrennungsmotor mit Direkteinspritzung, der mit einem ersten Kraftstoff 22 (z.B. Benzin) und einem zweiten Kraftstoff 23 (z.B. LPG) betrieben wird. Dazu weist die Kraftstoffanlage vor dem Einbau des Systems zum Austausch der Kraftstoffe folgende Elemente auf:
- Einen ersten Kraftstoffbehälter 1 für den ersten Kraftstoff 22, eine erste Kraftstoffförderpumpe 2, welche den ersten Kraftstoff 22 vom ersten Kraftstoffbehälter 1 in ein Leitungssystem der Kraftstoffanlage befördert;
- Einen zweiten Kraftstoffbehälter 11 für den zweiten Kraftstoff 23, eine zweite Kraftstoffförderpumpe 12, welche den zweiten Kraftstoff 23 vom zweiten Kraftstoffbehälter 11 in das Leitungssystem der Kraftmaschine befördert;
- Eine Kraftstoff-Hochdruckpumpe 3 mit einem Druckregler 4;
- Einen Kraftstoff-Verteiler 16, welcher dazu eingerichtet ist, zwischen einer Zufuhr des ersten und zweiten Kraftstoffes zur Kraftstoff-Hochdruckpumpe 3 zu schalten. Der Kraftstoff-Verteiler 16 kann ferner dazu eingerichtet sein, einen Rücklauf des zweiten Kraftstoffes 23 über eine Kraftstoffanlage-Rücklaufleitung 25 von der Kraftstoff-Hochdruckpumpe 3 zum zweiten Kraftstoffbehälter 11 zu gewährleisten.

Ferner weist die Kraftmaschine ein Einspritzsystem 8 mit Einspritzdüsen 9 und einem Drucksensor 10 zur Kontrolle und Steuerung des Druckes im Einspritzsystem 8 auf.

In der gezeigten Ausführungsform weist das System zum Austausch von Kraftstoffen eine Kraftstoff-Austauscheinheit 17 mit einen Druckspeicher 7 und einem Druckspeicher-Ventil 6, eine Austausch-Rücklaufleitung 24, ein Rücklauf-Ventil 15 und ein Rückschlagventil 5 auf, wobei letzteres in der Regel im Kraftstoff-Verteiler 16 integriert ist.

Druckspeicher 7 und Druckspeicher-Ventil 6 sind dem Einspritzsystem 8 der Kraftmaschine vor- und der Kraftstoff-Hochdruckpumpe 3, beziehungsweise dem Druckregler 4 nachgelagert angeordnet, indem sie an einen entsprechenden Teil des Leitungssystems der Kraftstoffanlage angeschlossen sind.

Die Austausch-Rücklaufleitung 24 verbindet den besagten Teil des Leitungssystems der Kraftstoffanlage zwischen Kraftstoff-Hochdruckpumpe 3, beziehungsweise Druckregler 4, und Einspritzsystem 8 mit der Kraftstoffanlage-Rücklaufleitung 25. Dazu weist die Austausch-Rücklaufleitung 24 einen hochdruckseitigen Anschluss 26 an das besagte Teil des Leitungssystems der Kraftstoffanlage und einen zweiten Anschluss 27 an die Kraftstoffanlage-Rücklaufleitung 25 auf. Das Rücklauf-Ventil 15 kontrolliert den Fluss eines Kraftstoffes über die Austausch-Rücklaufleitung 24, indem es in die Austausch-Rücklaufleitung 24 integriert ist.

Das Rückschlagventil 5 verhindert, dass Kraftstoff, welcher über die Austausch-Rücklaufleitung 24 geführt wird, in den Kraftstoff-Verteiler 16 dringt.

Eine wie in **Figur 1** gezeigte Kraftstoffanlage mit einem eingebauten System gemäss erstem Aspekt lässt sich wie folgt betreiben:
- Betrieb der Kraftmaschine durch ersten Kraftstoff 22: die erste Kraftstoffförderpumpe 2 fördert ersten Kraftstoff 22 aus dem ersten Kraftstoffbehälter 1 in das Leitungssystem der Kraftstoffanlage 20. Der Kraftstoff-Verteiler 16 leitet diesen Kraftstoff zur Kraftstoff-Hochdruckpumpe 3 und zum Druckregler 4, wo der erste Kraftstoff 22 auf den für den ersten Kraftstoff benötigten Arbeitsdruck (Systemdruck) gebracht wird. Der unter Arbeitsdruck stehende erste Kraftstoff 22 wird dann über das Leitungssystem der Kraftstoffanlage dem Einspritzsystem 8 zugeführt.
   Bei Betrieb der Kraftmaschine durch den ersten Kraftstoff 22 ist die zweite Kraftstoffförderpumpe 12 inaktiv und das Rücklauf-Ventil 15 geschlossen. Der Druckspeicher 7 wird während des Betriebs der Kraftmaschine mit erstem Kraftstoff 22 befüllt. Dies entspricht einem ersten Schritt zum Austausch des Kraftstoffes unter Verwendung des Systems gemäss erstem Aspekt. Dazu ist das Druckspeicher-Ventil 6 geöffnet. Nach Befüllung des Druckspeichers 7 wird das Druckspeicher-Ventil 6 geschlossen.
- Betrieb der Kraftmaschine durch zweiten Kraftstoff 23: die zweite Kraftstoffförderpumpe 12 fördert zweiten Kraftstoff 23 aus dem zweiten Kraftstoffbehälter 11 in das Leitungssystem der Kraftstoffanlage 20. Der Kraftstoff-Verteiler 16 leitet diesen Kraftstoff zur Kraftstoff-Hochdruckpumpe 3 und zum Druckregler 4, wo der zweite Kraftstoff 23 auf den für den zweiten Kraftstoff benötigten Arbeitsdruck (Systemdruck) gebracht wird. Der unter Arbeitsdruck stehende zweite Kraftstoff 23 wird dann über das Leitungssystem der Kraftstoffanlage dem Einspritzsystem 8 zugeführt.
   Die über den Kraftstoff-Verteiler 16 geführte Kraftstoffanlage-Rücklaufleitung 25 sorgt dafür, dass überflüssiger zweiter Kraftstoff in den zweiten Kraftstoffbehälter zurückgeführt wird. Ferner stellt die Kraftstoffanlage-Rücklaufleitung 25 eine Rückführung von zweitem Kraftstoff bei Kavitation im Eingangsbereich der Kraftstoff-Hochdruckpumpe 3 sicher.
   Bei Betrieb der Kraftmaschine durch den zweiten Kraftstoff 23 sind das Rücklauf-Ventil 15 sowie das Druckspeicher-Ventil 6 geschlossen.
- Ablassen des zweiten Kraftstoffes 23 über die Austausch-Rücklaufleitung 24: dies entspricht dem zweiten Schritt zum Austausch des Kraftstoffes unter Verwendung des Systems gemäss erstem Aspekt. Dabei wird nach Ausschalten der Kraftmaschine zweiter Kraftstoff 23, der sich im Einspritzsystem 8 und in Teilen des Leitungssystems der Kraftstoffanlage befindet in den zweiten Kraftstoffbehälter 11 abgelassen, indem das Rücklauf-Ventil 15 öffnet. Erste und zweite Kraftstoffförderpumpe sowie die Kraftstoff-Hochdruckpumpe 3 und das Einspritzsystem 8 sind inaktiv und das Druckspeicher-Ventil 6 ist geschlossen.
   Alternativ ist ein Ablassen des zweiten Kraftstoffes 23 in einen Speicherbehälter 18 für zweiten Kraftstoff 23 möglich. Im Speicherbehälter 18 gespeicherter zweiter Kraftstoff 23 kann bei späterem Betrieb der Kraftmaschine durch zweiten Kraftstoff 23 wieder in Richtung Einspritzsystem abgegeben werden. Diese alternative Ausführungsform ist durch strichpunktierten Linien in **Figur 1** gekennzeichnet.
- Befüllen des Einspritzsystems 8 mit erstem Kraftstoff 22 aus dem Druckspeicher 7: dies entspricht dem dritten Schritt zum Austausch des Kraftstoffes unter Verwendung des Systems gemäss erstem Aspekt. Dazu wird das Rücklauf-Ventil 15 geschlossen, bevor das Druckspeicher-Ventil 6 öffnet. Erste und zweite Kraftstoffpupe sowie die Kraftstoff-Hochdruckpumpe 3 und das Einspritzsystem 8 sind inaktiv.

**Figur 2** zeigt eine schematische Darstellung einer Kraftstoffanlage 20 gemäss **Figur 1**, in welcher ein alternatives System gemäss erstem Aspekt eingebaut ist, indem das System als zentrales Element eine Boost-Pumpe 117 mit einem Boost-Pumpen-Eingang 118 und einem Boost-Pumpen-Ausgang 119 an Stelle des Druckspeichers 7 aufweist.

Die Boost-Pumpe ist über den hochdruckseitigen Anschluss 26 an den Hochdruckbereich der Kraftstoffanlage 20 angeschlossen und durch ein Boost-Pumpen-Rückschlagventil 121 gegen Überdruck am Boost-Pumpen-Ausgang 119 abgesichert.

In der gezeigten Ausführungsform bezieht die Boost-Pumpe den ersten Kraftstoff 22 aus einem als separaten Behälter ausgelegten Reservoir 120, welches während des Betriebs der Kraftmaschine, und somit der ersten Kraftstoffförderpumpe 2, gefüllt wird. Die Boost-Pumpe kann aber auch in das Reservoir 120 integriert sein.

Alternative Ausführungsformen zur Versorgung der Boost-Pumpe 117 ohne Reservoir 120 sind mittels strichpunktierten Linien dargestellt. Es handelt sich dabei um eine direkte Versorgung aus dem ersten Kraftstoffbehälter 1 beziehungsweise um eine Versorgung über einen Zugriff auf einen Bereich des Leitungssystems, in welchem erster Kraftstoff 22 führbar ist. Letzteres kann ein Einschalten der ersten Kraftstoffförderpumpe 2 bedingen.

Ferner kann die Boost-Pumpe 117 kaskadierbar sein, das heisst, dass mehrere Pumpen zwecks Druckerhöhung hintereinander schaltbar sind.

Ferner zeigt **Figur 2** als mögliche Ergänzung einen Druckspeicher 7 und ein Druckspeicher-Ventil 6, welches zur Erhöhung des Druckes von erstem Kraftstoff 22, welcher aus dem Boost-Pumpen-Ausgang 119 in Richtung Einspritzsystem 8 strömt, einsetzbar ist.

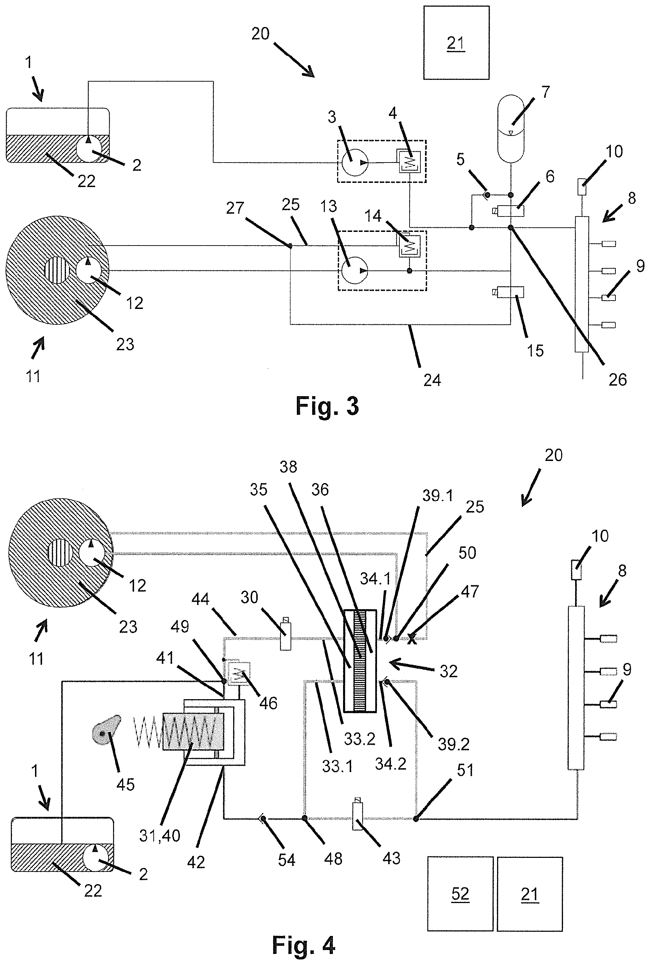

**Figur 3** zeigt eine schematische Darstellung eine zweite Ausführungsform einer Kraftstoffanlage 20 mit einem eingebauten System gemäss erstem Aspekt. Wie in **Figur 1** handelt es sich bei der Kraftmaschine um einen Vierzylinder-Verbrennungsmotor mit Direkteinspritzung, der über die Kraftstoffanlage 20 mit einem ersten Kraftstoff 22 (z.B. Benzin) und einem zweiten Kraftstoff 23 (z.B. LPG) betrieben wird. Der Hauptunterschied zur Kraftstoffanlage gemäss **Figur 1** liegt darin, dass erster und zweiter Kraftstoff je über eine gesonderte Kraftstoff-Hochdruckpumpe in Verbindung mit je einem Druckregler auf Arbeitsdruck gebracht werden. Die gezeigte Kraftstoffanlage mit eingebautem System gemäss erstem Aspekt weist deshalb folgende Unterschiede auf zur Kraftstoffanlage gemäss **Figur 1** auf:
- Neben einer ersten Kraftstoff-Hochdruckpumpe 3 mit erstem Druckregler 4 ist eine zweite Kraftstoff-Hochdruckpumpe 13 mit einem zweiten Druckregler 14 vorhanden.
- Die Kraftstoffanlage-Rücklaufleitung 25 verbindet direkt einen Ausgang des zweiten Druckreglers 14 mit dem zweiten Kraftstoffbehälter 11.

Der Betrieb der in **Figur 3** gezeigten Kraftstoffanlage 20 mit eingebautem System gemäss erstem Aspekt sowie der Austausch der Kraftstoffe ist analog zu der in **Figur 1** gezeigten Kraftmaschine mit eingebautem System gemäss erstem Aspekt.

**Figur 3** zeigt ferner eine alternative Ausführungsform zur Befüllung des Druckspeichers 7. Dazu weist das System einen Bypass zum Druckspeicher-Ventil 6 auf, wobei ein Rückschlagventil 5 sicherstellt, dass der erste Kraftstoff 22 über diesen Bypass nur in den Druckspeicher 7 hinein- nicht aber aus diesem hinausströmt. Das Druckspeicher-Ventil 6 ist dann immer in geschlossenem Zustand, ausser wenn der im Druckspeicher 7 befindliche erste Kraftstoff 22 in das Einspritzsystem abgelassen werden soll.

**Figur 4** zeigt eine schematische Darstellung einer Kraftstoffanlage 20 mit einem eingebauten System gemäss einem zweiten, die Erfindung umfassenden Aspekt. Die Kraftstoffanlage 20 mit eingebautem System befördert einerseits über eine Kraftstoff-Hochdruckpumpe 40, welche in der gezeigten Ausführungsform auch die Funktion einer Antriebseinheit 31 ausübt, einen ersten Kraftstoff 22 (z.B. Benzin) von einem ersten Kraftstoffbehältern 1 zu einem Einspritzsystem 8 Andererseits befördert die Kraftstoffanlage 20 über einen Medienwandler 32 einen zweiten Kraftstoff 23 (z.B. LPG) von einem zweiten Kraftstoffbehälter 11 zum Einspritzsystem 8. Wie in den **Figuren 1 bis 3** handelt es sich bei der Kraftmaschine, die über die Kraftstoffanlage 20 versorgt wird, um einen Vierzylinder-Verbrennungsmotor mit Dircktcinspritzung.

Die Kraftstoffanlage weist vor dem Einbau des Systems die folgenden Elemente auf: den erste Kraftstoffbehälter 1 mit einer ersten Kraftstoffförderpumpe 2, welche den ersten Kraftstoff 22 vom ersten Kraftstoffbehälter 1 in das Leitungssystem der Kraftstoffanlage befördert; die Kraftstoff-Hochdruckpumpe 40 mit einen Druckregler 46 für den ersten Kraftstoff 22 entspricht; das Einspritzsystem 8 mit Einspritzdüsen 9 und einem Drucksensor 10 zur Kontrolle und Steuerung des Druckes im Einspritzsystem 8; eine Kraftmaschinen-seitige Steuerung 52, welche auch den Betrieb der Kraftstoffanlage vor dem Einbau des Systems steuert.

In der gezeigten Ausführungsform weist das System auf:
- Den Medienwandler 32, welcher über ein erstes Zu-/Ableitungspaar (erste Zuleitung 33.1, erste Ableitung 33.2) mit erstem Kraftstoff 22 versorgt werden kann, und welcher dazu eingerichtet ist, unter Verwendung eines zweites Zu-/Ableitungspaar (zweite Zuleitung 34.1, zweite Ableitung 34.2), den zweiten Kraftstoff 23 auf Arbeitsdruck zu bringen und über das Leitungssystem zum Einspritzsystem 8 zu befördern.
- Ein erster Zuleitungsanschluss 48, ein erster Ableitungsanschluss 49, ein zweiter Zuleitungsanschluss 50 und ein zweiter Ableitungsanschluss 51. Dabei greifen der erste Zuleitungsanschluss 48 und der zweite Ableitungsanschluss 51 auf einen Teil des Leitungssystems der Kraftstoffanlage zu, der sich zwischen der Kraftstoff-Hochdruckpumpe 40 und dem Einspritzsystem 8 befindet, wobei der zweite Ableitungsanschluss 51 dem ersten Zuleitungsanschluss 48 nachgelagert ist. Der erste Ableitungsanschluss 49 greift auf einen Teil des Leitungssystems der Kraftstoffanlage zu, welcher sich zwischen erstem Kraftstoffbehälter 1 und Kraftstoff-Hochdruckpumpe 40 befindet. Der zweite Zuleitungsanschluss 50 stellt eine Verbindung des Medienwandlers 32 mit dem zweiten Kraftstoffbehälter 11 sicher, wobei dieser Anschluss einer allfällig vorhandenen Kraftstoffanlage-Rücklaufleitung 25 nachgelagert oder über ein T-Stück realisiert ist.
- Ein Umschaltventil 43, mit welchem zwischen einer Versorgung des Einspritzsystems 8 mit dem ersten Kraftstoff 22 und einer Versorgung mit dem zweiten Kraftstoff 23 umgeschaltet werden kann. In der gezeigten Ausführungsform ist das Umschaltventil 43 im Leitungssystem zwischen dem ersten Zuleitungsanschluss 48 und dem zweiten Ableitungsanschluss 51 angeordnet. Alternativ ist insbesondere ein als 3/2-Wegeventil ausgelegter Zuleitungsanschluss 48 vorteilhaft.
- Ein steuerbares Ventil 30, mit welchem der Abfluss von erstem Kraftstoff 22 aus dem Medienwandler 32 über eine Rücklauf 44 zum Eingang der Kraftstoff-Hochdruckpumpe 40, beziehungsweise zum ersten Kraftstoffbehälter 1 steuerbar ist. Das steuerbare Ventil 30 ist ferner dazu eingerichtet, den Durchfluss von erstem Kraftstoff 22 durch den Medienwandler 32 zu kontrollieren. Das steuerbare Ventil 30 ist schnellschaltend, d.h. im Takt des Druckreglers 46 der Kraftstoff-Hochdruckpumpe 40.
- Ein zuleitungsseitiges Rückschlagventil 39.1, durch welches sichergestellt wird, dass kein Kraftstoff den Medienwandler 32 über die zweite Zuleitung 34.1 verlassen kann.
- Ein ableitungsseitiges Rückschlagventil 39.2, durch welches sichergestellt wird, dass kein Kraftstoff über die zweite Ableitung 34.2 in den Medienwandler 32 strömt.
- Eine Blende 47 oder ein Druckregler, über welche(r) überflüssiger zweiter Kraftstoff im Bereich der zweiten Zuleitung 34.1 in Richtung des zweiten Kraftstoffbehälters 11 zurückgeleitet werden kann. Ferner kann über die Blende 47, beziehungsweise über den Druckregler, eine Rückführung von zweitem Kraftstoff bei Kavitation (Gasbildung) sichergestellt werden.
- Eine Steuerung 21, welche dazu eingerichtet ist, das System zu steuern. Insbesondere regelt die Steuerung 21 alle Ventile des Systems, die zum nachfolgend beschriebenen Betrieb der Kraftstoffanlage mit integriertem System benötigt werden.
- Ein hochdruckseitiges Rückschlagventil 54, welches sicherstellt, dass kein Kraftstoff aus dem Medienwandler 32 über die erste Zuleitung 33.1 in Richtung Kraftstoff-Hochdruckpumpe 40 strömt. Wenn die Kraftstoff-Hochdruckpumpe 40 die Funktion der Antriebseinheit 31 ausübt - wie in **Figur 4** gezeigt - ist das hochdruckseitige Rückschlagventil 54 in die Kraftstoff-Hochdruckpumpe 40 integriert.

Je nachdem, ob das System zur Umrüstung auf eine Bi-Fuel Kraftstoffanlage verwendet wird, oder ob das System in eine bereits auf Bi-Fuel umgerüstete Kraftstoffanlage eingebaut wird, kann das System zusätzlich folgende Elemente aufweisen: den zweite Kraftstoffbehälter 11 mit einer zweiten Kraftstoffförderpumpe 12; ein Leitungssystem, welches einen Ausgang der zweiten Kraftstoffförderpumpe 12 mit der zweiten Zuleitung 34.1 des Medienwandlers 32 verbindet; die Kraftstoffanlage-Rücklaufleitung 25.

In der gezeigten Ausführungsform weist der Medienwandler 32 ein erstes Volumen 35 und ein zweites Volumen 36 auf, welche durch einen Kolben 38 flüssigkeitsdicht getrennt sind.

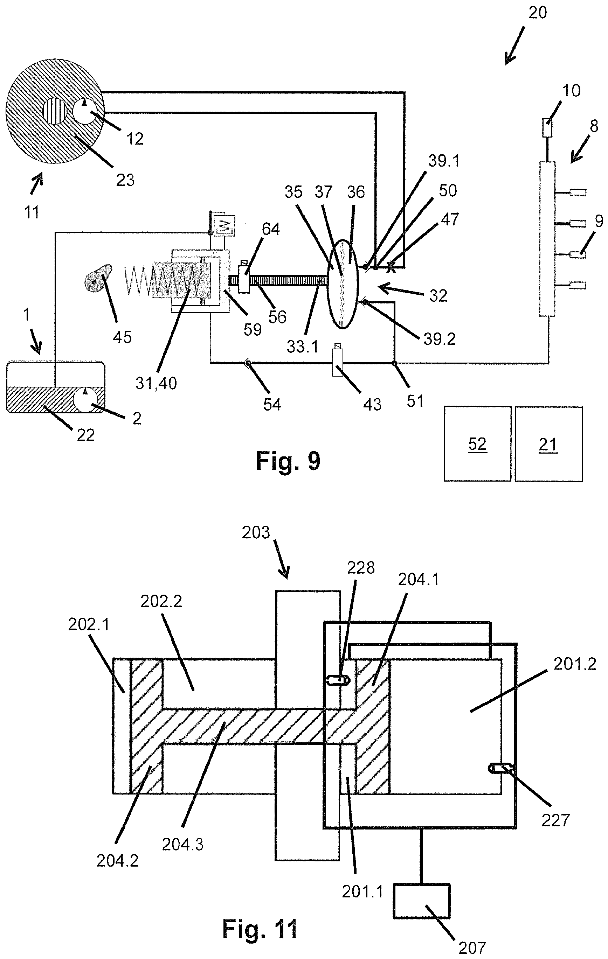

Anstelle des Kolbens 38 kann das erste Volumen 35 auch durch eine Membran 37 vom zweiten Volumen 36 flüssigkeitsdicht getrennt sein (wie beispielsweise in **Figur 9** gezeigt).

Erster Kraftstoff 22 ist über das erste Zu-/Ableitungspaar in das erste Volumen 35 ein- und ausleitbar. Zweiter Kraftstoff 23 ist über das zweite Zu-/Ableitungspaar in das zweite Volumen 36 ein- und ausleitbar.

Eine wie in **Figur 4** gezeigte Kraftmaschine mit einem eingebauten System gemäss zweitem Aspekt arbeitet wie folgt:
- Die erste Kraftstoffförderpumpe 2 befördert den ersten Kraftstoff 1 unter Vordruck zu einem Eingang 41 der Kraftstoff-Hochdruckpumpe 40;
- Die Kraftstoff-Hochdruckpumpe 40 bringt den ersten Kraftstoff 22 auf Arbeitsdruck, welcher in der Regel grösser als 40 bar ist.

Die Kraftstoff-Hochdruckpumpe wird über eine Nockenwelle durch die Kraftmaschine selbst angetrieben. Dadurch variiert der Druck des ersten Kraftstoffes 22 in einem vom Motor vorgegebenen Takt, welcher insbesondere von der Motordrehzahl und der Anzahl Nocken an der Nockenwelle abhängig ist.
- Bei Betrieb der Kraftmaschine durch den ersten Kraftstoff 22 ist das Umschaltventil 43 geöffnet (beziehungsweise das 3/2-Wegeventil leitet ersten Kraftstoff 22 in Richtung Einspritzsystem 8) und das steuerbare Ventil 30 geschlossen. Dadurch ist das System des zweiten Kraftstoffes inaktiv und die Kraftmaschine wird vom ersten Kraftstoff 11 angetrieben, wie es bei der Kraftstoffanlage vor Einbau des Systems der Fall war.
- Bei Betrieb der Kraftmaschine durch den zweiten Kraftstoff 23 ist das Umschaltventil 43 geschlossen, beziehungsweise das 3/2-Wegeventil leitet ersten Kraftstoff 22 in Richtung der ersten Zuleitung 33.1 des Medienwandlers 32. Dadurch kann erster Kraftstoff 22 unter zyklisch variierendem Hochdruck in das erste Volumen 35 umgeleitet werden.

Ferner befördert die zweite Kraftstoffförderpumpe 12 den zweiten Kraftstoff 23 über die zweite Zuleitung 34.1 in das zweite Volumen 36, wo eine zyklische Druckerhöhung stattfindet. Ein Zyklus weist dabei folgende Schritte auf:
1. Ausgangslage: Das erste Volumen 35 ist mit erstem Kraftstoff 22 und das zweite Volumen 36 ist mit zweitem Kraftstoff 23 gefüllt, wobei der Druck in beiden Volumen identisch und der Kolben 38 eine Grundstellung einnimmt. Das steuerbare Ventil 30 ist geschlossen.
2. Der erste Kraftstoff 22 tritt unter Hochdruck über die erste Zuleitung 33.1 in das erste Volumen 35. Dadurch wird der Kolben 38 in Richtung des zweiten Volumens 36 ausgelenkt und der zweite Kraftstoff 23 mit Druck beaufschlagt.
3. Der zweite Kraftstoff 23 tritt unter Druck über die zweite Ableitung 34.2 aus dem zweiten Volumen 36 in Richtung Einspritzsystem 8 aus. Das zuleitungsseitige Rückschlagventil 39.1 verhindert ein Ausströmen von zweitem Kraftstoff 23 über die zweite Zuleitung 34.1.
4. Die Kraftstoff-Hochdruckpumpe 40 fördert keinen ersten Kraftstoff 22 mehr in Richtung Medienwandler 32 und das steuerbare Ventil 30 öffnet kurzzeitig, wodurch erster Kraftstoff 22 aus dem ersten Volumen 35 tritt. Dadurch kann zweiter Kraftstoff 23 über die zweite Zuleitung 34.1 in das zweite Volumen 36 eintreten und der Kolben in seine Grundstellung zurückkehren.
5. Das steuerbare Ventil 30 schliesst und der Zyklus kann von vorne beginnen.
   Um ein sauberes Laufen der Kraftmaschine zu ermöglichen, wird das System im Takt der Kraftmaschine, bei einem Verbrennungsmotor im Takt der Motorendrehzahl, angesteuert.

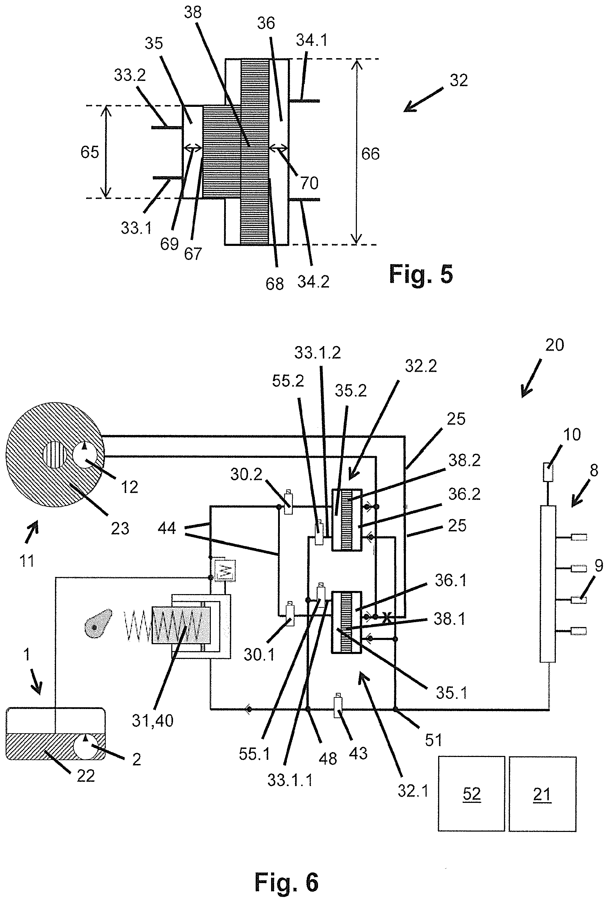

**Figur 5** zeigt eine schematische Darstellung eines Medienwandlers 32, der Abmessungen aufweist, durch welche der Medienwandlers 32 als Druck- und Fördermengenwandler betreibbar ist. Dazu weist der Kolben 38 (beziehungsweise die Membran 37) gegen das erste Volumen 35 hin eine erste Stirnfläche 67 und gegen das zweite Volumen 36 hin eine zweite Stirnfläche 68 auf. Das erste Volumen 35 ist neben einer durch die Bewegung des Kolbens 38 (beziehungsweise durch die Auslenkung der Membran 37) variablen ersten räumlichen Ausdehnung 69 senkrecht zur ersten Stirnfläche 67 durch ein erstes, kreisförmiges Profil mit einem ersten Durchmesser 65 gegeben. Analog ist das zweite Volumen 36 neben einer durch die Bewegung des Kolbens 38 (beziehungsweise durch die Auslenkung der Membran 37) variablen zweiten räumlichen Ausdehnung 70 senkrecht zur zweiten Stirnfläche 68 durch ein zweites, kreisförmiges Profil mit einem zweiten Durchmesser 66 gegeben.

In der gezeigten Ausführungsform ist die Fläche der ersten Stirnfläche 67 kleiner als die Fläche der zweiten Stirnfläche 68. Dadurch arbeitet der Medienwandler 32 nach Anschluss über die erste Zu-/Ableitung (33.1, 33.2), beziehungsweise die zweite Zu-/Ableitung (34.1, 34.2) als Druckminderer, d.h. der im zweite Volumen erzeugte Druck ("zweiter Druck") ist tiefer als der im ersten Volumen vorherrschende Druck ("erster Druck"). Ferner ist die durch den gezeigten Medienwandler 32 geförderte Menge an zweitem Kraftstoff höher, als die durch das erste Volumen geförderte Menge an erstem Kraftstoff, d.h. die Fördermenge wird erhöht.

**Figur 6** zeigt eine Kraftstoffanlage 20 in welche ein System gemäss zweitem Aspekt eingebaut ist, wobei das System in der gezeigten Ausführungsform einen ersten Medienwandler 32.1 und einen zweiten Medienwandler 32.2 aufweist. Die beiden Medienwandler sind parallel geschaltet und arbeiten so zusammen, dass die Kraftmaschine mit genügend zweitem Kraftstoff 23 versorgt wird, obwohl beide Medienwandler in einem Schaltbereich arbeiten, der tiefer oder gleich ist wie die Taktung der Kraftstoff-Hochdruckpumpe 40. Dazu arbeiten die beiden Medienwandler asynchron, d.h. sobald der Kolben 38.1 (beziehungsweise die Membran) des ersten Medienwandlers 32.1 maximal in Richtung des zweiten Volumens 36.1 des ersten Medienwandlers 32.1 ausgelenkt ist, beginnt die Auslenkung des Kolbens 38.2 des zweiten Medienwandlers 32.2 und somit die Förderung des zweiten Kraftstoffes 23 durch den zweiten Medienwandler 32.2. Während der zweite Medienwandler 32.2 den zweiten Kraftstoff 23 fördert, kehrt der Kolben 38.1 des ersten Medienwandlers 32.1 in seine nicht ausgelenkte Grundstellung zurück und zweiter Kraftstoff 23 strömt in das sich vergrössernde zweite Volumen 36.1 des ersten Medienwandlers 32.1 ein. Der Kolben 38.1 des ersten Medienwandlers 32.1 nimmt spätestens dann seine nicht ausgelenkte Grundstellung ein, wenn der Kolben 38.2 des zweiten Medienwandlers 32.2 maximal in Richtung des zweiten Volumens 36.2 des zweiten Medienwandlers 32.2 ausgelenkt ist, wodurch der erste Medienwandler 32.1 die Förderung des zweiten Kraftstoffes 23 übernehmen kann, während der Kolben 38.2 des zweiten Medienwandlers 32.2 unter Einströmen von zweitem Kraftstoff 23 in das zweite Volumen 36.2 des zweiten Medienwandlers 32.2 in seine nicht ausgelenkte Grundstellung zurückkehren kann.

Um ein asynchrones Zusammenarbeiten der beiden Medienwandler zu gewährleisten, weist das System gemäss **Figur 6** zusätzlich ein erstes zuleitungsseitiges Steuerventil 55.1, welches auf der ersten Zuleitung 33.1.1 des ersten Medienwandlers 32.1 angebracht ist, und ein zweites zuleitungsseitiges Steuerventil 55.2, welches auf der ersten Zuleitung 33.1.2 des zweiten Medienwandlers 32.2 angebracht ist, auf. Davon abgesehen sind die beiden Medienwandler analog zu **Figur 4** in die Kraftstoffanlage 20 integriert und sie werden wie zuvor beschrieben betrieben (u.a. Umschaltventil 43, steuerbares Ventil 30.1 des ersten Medienwandlers 32.1, erster Zuleitungsanschluss 48, zweiter Ableitungsanschluss 51, steuerbares Ventil 30.2 des zweiten Medienwandlers 32.2, Kraftstoffanlage-Rücklaufleitung 25, Rücklauf 44 etc.).

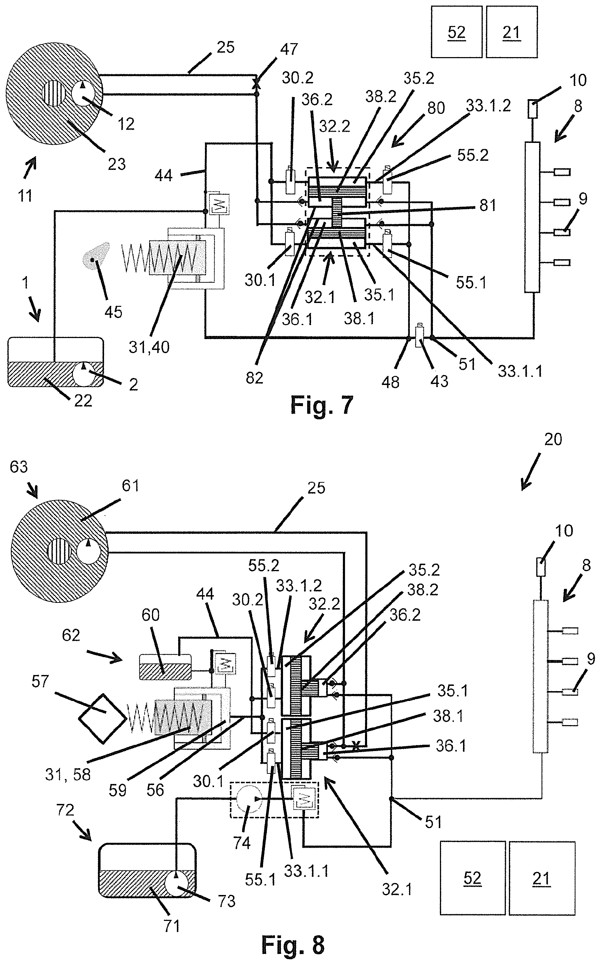

Alternativ kann ein asynchrones Zusammenarbeiten der beiden Medienwandler auch durch eine integrale Bauweise der Medienwandler erreicht werden. **Figur 7** zeigt eine dahingehende Ausführungsform am Beispiel eines Doppel-Medienwandlers 80 mit zwei Fronten. In der gezeigten Ausführungsform bildet der Kolben 38.1 des ersten Medienwandlers 32.1 (beziehungsweise dessen auslenkbares Element) eine erste Front und der Kolben 38.2 des zweiten Medienwandlers 32.2 (beziehungsweise dessen auslenkbares Element) eine zweite Front. Der Kolben 38.1 des ersten Medienwandlers 32.1 ist dabei über eine starre Verbindung 81 mit dem Kolben 38.2 des zweiten Medienwandlers 32.2 verbunden. Das zweite Volumen 36.1 des ersten Medienwandlers 32.1 ist durch eine Trennwand 82 vom zweiten Volumen 36.2 des zweiten Medienwandlers 32.2 getrennt, wobei die starre Verbindung 81 der beiden Kolben durch eine Führung so in der Trennwand 82 beweglich gelagert ist, dass kein Druckausgleich zwischen den beiden zweiten Volumen oder zwischen einem zweiten Volumen und der Umgebung stattfindet. Die Zu- beziehungsweise Ableitung in/aus dem ersten Volumen eines jeden Medienwandlers ("erste Zu-/Ableitung") befinden sich jeweils in einem Bereich des Medienwandlers, welcher auf der der Trennwand 82 abgewandten Seite des jeweiligen Kolbens liegt. Dieser Bereich definiert folglich das jeweilige erste Volumen (erstes Volumen 35.1 des ersten Medienwandlers 32.1, erstes Volumen 35.2 des zweiten Medienwandlers 32.2). Die Zu- beziehungsweise Ableitung in/aus dem zweiten Volumen eines jeden Medienwandlers ("zweite Zu-/Ableitung") befinden sich jeweils in einem Bereich des Medienwandlers, welcher zwischen Trennwand 82 und entsprechendem Kolben liegt. Ein solcher Medienwandler wird betreiben, indem abwechslungsweise Fluid (erster Kraftstoff) unter Druck in das erste Volumen 35.1 des ersten Medienwandlers 32.1 beziehungsweise in das erste Volumen 35.2 des zweiten Medienwandlers 32.2 eingelassen wird.

Ergänzend oder alternativ zu Ausführungsformen mit zwei (oder mehr) Medienwandlern ist es auch möglich, die beiden Medienwandler unterschiedlich zu dimensionieren, insbesondere ein unterschiedliches Verhältnis zwischen erstem und zweitem Durchmesser (siehe auch die **Figuren 5** und **8**) zu wählen, und gegebenenfalls über die Steuerung 21 unterschiedliche Ansteuerzeiten der Ventile, welche den ersten beziehungsweise zweiten Medienwandler steuern, zu gewährleisten, so dass zweiter Kraftstoff 23, der aus dem ersten Medienwandler 32.1 in Richtung Einspritzsystem 8 strömt einen unterschiedlichen Druck und/oder eine unterschiedliche Fördermenge pro Zyklus im Vergleich zu zweitem Kraftstoff 23, der aus dem zweiten Medienwandler 32.2 strömt, aufweist.

Alternativ können erste und zweites Volumen, beziehungsweise erstes und zweites Zu-/Ableitungspaar eines jeden Medienwandlers vertauscht sein.

In **Figur 7** werden Ausführungsformen des Medienwandlers gezeigt, bei welchen das erste Volumen 35 jeweils durch einen Kolben 38 vom zweiten Volumen 36 getrennt ist. Alternativ kann auch ein oder beide Medienwandler mit einer Membran 37, wie in **Figur 9** gezeigt, arbeiten.

**Figur 8** zeigt eine Kraftstoffanlage 20 in welche ein System gemäss zweitem Aspekt integriert ist, wobei nicht eine Kraftstoff-Hochdruckpumpe als Antriebseinheit 31 dient, sondern eine andere Pumpe 58, welche ein Fluid 60 fördert. Ein Beispiel einer solchen Pumpe ist eine Ölpumpe, welche über einen Kettenantrieb 57 angetrieben wird.

Da solche Pumpen 58 in der Regel keine zyklischen Druckspitzen generieren, weist das in **Figur 8** gezeigte System einen ersten Medienwandler 32.1 und einen zweiten Medienwandler 32.2, ein erstes zuleitungsseitiges Steuerventil 55.1 und ein steuerbares (ableitungsseitiges) Ventil 30.1 des ersten Medienwandlers 32.1 sowie ein zweites zuleitungsseitiges Steuerventil 55.2 und ein steuerbares (ableitungsseitiges) Ventil 30.2 des zweiten Medienwandlers 32.2 auf. Ferner weist das System ein Fluidreservoir 62 und eine Rücklaufleitung 44 auf, welche das erste Volumen des ersten beziehungsweise zweiten Medienwandlers über das entsprechende (ableitungsseitige) steuerbare Ventil mit dem Fluidreservoir verbindet.

Ferner sind in der gezeigten Ausführungsform die Medienwandler auf der Seite ihres ersten Volumens (erstes Volumen 35.1 des ersten Medienwandlers 32.1, erstes Volumen 35.2 des zweiten Medienwandlers 32.2) an der als Pumpe 58 ausgelegten Antriebseinheit 31 angeflanscht und mittels einer Druckleitung 56 direkt aus dem Verdichtungsraum 59 der Pumpe 58 mit dem unter Druck stehenden Fluid 60 versorgbar. Eine Versorgung über einen anderen Ausgang der Antriebseinheit und/über ein zur Antriebseinheit gehörendes Leitungssystem ist ebenfalls möglich.

Mit Hilfe der zuleitungsseitigen Steuerventile (55.1 und 55.2), der (ableitungsseitigen) steuerbaren Ventil (30.1 und 30.2) sowie einer entsprechend ausgelegten Steuerung 21 ist so ein zyklisch variierender Druck an der Zuleitung 33.1.1 zum ersten Volumen 35.1 des ersten Medienwandlers 32.1, beziehungsweise an der Zuleitung 33.1.2 zum ersten Volumen 35.2 des zweiten Medienwandlers 32.2 erzeugbar. Dabei arbeiten die beiden Medienwandler wiederum asynchron zueinander, wie beispielsweise im Zusammenhang mit **Figur 6** beschreiben.

Bei Bedarf kann ein Verlust an Fluid 60 oder eine anderweitige Verwendung des Fluids 60 durch das Fluidreservoir 62 ausgeglichen werden.

Ferner sind die Medienwandler gemäss **Figur 8** so bemessen, dass sie zusätzlich als Druckwandler hin zu einer Druckerhöhung des über das zweite Volumen 36.1 des ersten Medienwandlers 32.1, beziehungsweise über das zweite Volumen 36.2 des zweiten Medienwandlers 32.2, geförderten Brennstoffes 61 gegenüber dem Druck des Fluids 60 arbeiten.

Der durch das System gemäss **Figur 8** geförderte Brennstoff 61 gelangt wie in **Figur 4** gezeigt von einem Brennstoffbehälter 63 in das zweite Volumen 36.1 des ersten Medienwandlers 32.1, beziehungsweise in das zweite Volumen 36.2 des zweiten Medienwandlers 32.2, und von dort zum Einspritzsystem 8 der Kraftmaschine.

Optional kann die in **Figur 8** gezeigte Kraftstoffanlage 20 einen Teilbereich zur Förderung eines zweiten Brennstoffes 71 aufweisen. Dieser Teilbereich weist insbesondere einen zweiten Brennstoffbehälter 72 mit einer Brennstoffförderpumpe 73 und eine Brennstoff-Hochdruckpumpe 74 mit Druckregler auf.

**Figur 9** zeigt eine Kraftstoffanlage 20, in welche ein System gemäss zweitem Aspekt integriert ist und das zur Versorgung eines Bi-Fuel Verbrennungsmotors mit Direkteinspritzung dient. In der gezeigten Ausführungsform verfügt der Medienwandler 32 über eine Membran 37, welche das erste vom zweiten Volumen trennt. Ferner wird das erste Volumen 35 (analog zu **Figur 8**) über die Druckleitung 56 direkt aus dem Verdichtungsraum 59 der Kraftstoff-Hochdruckpumpe 40 des ersten Kraftstoffes 22 versorgt. Der erste Kraftstoff 22 übernimmt folglich die Funktion des Fluids 60 und als Antriebseinheit 31 fungiert wiederum die Kraftstoff-Hochdruckpumpe 40, welche vom Verbrennungsmotor über die Nockenwelle 45 angetrieben wird. Dabei wird erster, im Verdichtungsraum 59 der Kraftstoff-Hochdruckpumpc 40 befindlicher Kraftstoff 22 in einen vom Motor vergebenen Takt (je nach Anzahl Nocken auf der Nockenwelle 45) in Richtung erstes Volumen 35 des Medienwandlers 32 befördert. Ein Schliessventil 64 koppelt den Medienwandler vom Verdichtungsraum 59 ab, sobald die Kraftmaschine über den ersten Kraftstoff 22 betrieben wird.

Durch diese Konstruktion mit Druckleitung 56, in welcher das Fluid als hydraulische Flüssigkeit agiert, kann auf einen durch das steuerbare Ventil 30 kontrollierten Rücklauf 44 vom ersten Volumen 35 des Medienwandlers 32 zum Eingang der Antriebseinheit 31 verzichtet werden.

Die Elemente des Systems, welche für die Zufuhr von zweitem Kraftstoff 23 zum Medienwandler 32 und zum Einspritzsystem 8 benötigt werden sowie das Umschalten zwischen erstem und zweitem Kraftstoff, sind in dieser Ausführungsform analog zu **Figur 4****.**

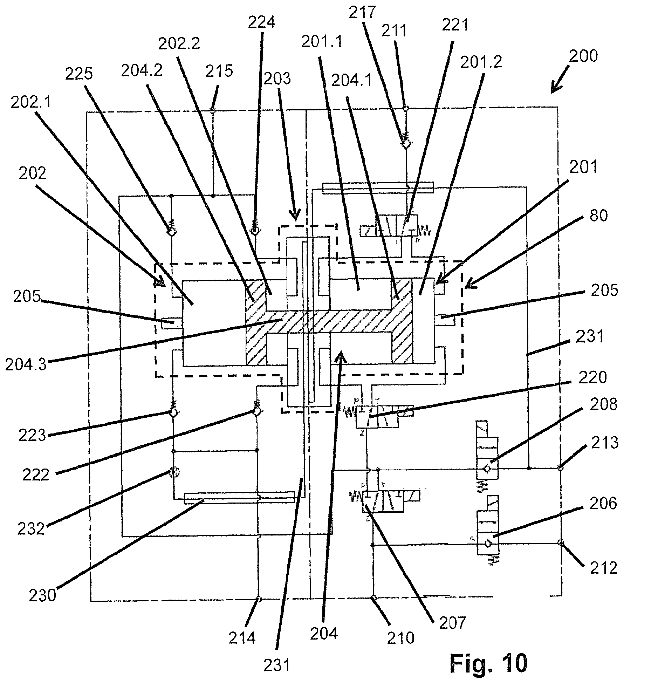

**Figur 10** zeigt eine Ausführungsform des Systems 200 gemäss zweitem Aspekt, das einen als Hydraulikblock realisierten Doppel-Medienwandler 80 umfasst.

Der Hydraulikblock weist einen ersten Blockteil 201, einen zweiten Blockteil 202, einen dritten Blockteil 203 und das auslenkbare Element 204 auf.

Das auslenkbare Element 204 weist einen ersten Kolben 204.1, einen zweiten Kolben 204.2 und eine starre Kolbenverbindung (Kolbenstange) 204.3 auf. Die Kolbenverbindung 204.3 steht senkrecht zu der Stirnfläche des ersten und zweiten Kolbens und wird durch eine Führung im dritten Blockteil 203 geführt.

Der erste Kolben 204.1 ist derart eingerichtet, dass er von einer Kolbenbohrung im ersten Blockteil 201 geführt wird. Der zweite Kolben 204.2 ist derart eingerichtet, dass er von einer Kolbenbohrung im zweiten Blockteil 202 geführt wird.

Die Führungen der Kolbenverbindung 204.3, des ersten Kolbens 204.1 und des zweiten Kolbens 204.2 weisen Abdichtungen auf, so dass voneinander getrennte Kammern gebildet werden.

Die Dichtungen sind insbesondere derart, dass kein Flüssigkeitsaustausch zwischen den Kammern entsteht.

In der gezeigten Ausführungsform ist die Stirnfläche des ersten Kolbens 204.1 identisch mit der Stirnfläche des zweiten Kolbens 204.2. Dies ist jedoch kein Erfordernis für ein Funktionieren des in Figur 10 gezeigten Systems. Vielmehr können die beiden Stirnflächen und gegebenenfalls eine Ausdehnung des ersten und zweiten Blockteils entlang der Bewegungsrichtung des auslenkbaren Elements 204 unterschiedlich sein, so dass auch der gezeigte Medienwandler als Druck-und/oder Fördermengenwandler betreibbar ist.

Der erste Kolben 204.1 unterteilt das erste Blockteil 201 in eine linke Kammer 201.1 und eine rechte Kammer 201.2. Das summierte Volumen der linken und rechten Kammer ist konstant, wobei allerdings eine Bewegung des ersten Kolbens 204.1 das relative Volumen von linker und rechter Kammer verändern kann.

Der zweite Kolben 204.2 unterteilt das zweite Blockteil 202 in eine linke Kammer 202.1 und eine rechte Kammer 202.2. Das summierte Volumen der linken und rechten Kammer ist konstant, wobei allerdings eine Bewegung des zweiten Kolbens 204.2 das relative Volumen von linker und rechter Kammer verändern kann.

Das maximale, beziehungsweise minimale, Volumen von linker und rechter Kammer ist in der Regel auf Grund der Kolbenverbindung 204.3 unterschiedlich.

In der gezeigten Ausführungsform entspricht die linke Kammer 201.1 des ersten Blockteils 201 dem erste Volumen eines ersten Medienwandlers des Doppel-Medienwandlers 80, die rechte Kammer 202.2 des zweiten Blockteils 202 dem zweite Volumen des ersten Medienwandlers, die rechte Kammer 201.2 des ersten Blockteils 202 dem ersten Volumen des zweiten Medienwandlers des Doppel-Medienwandlers 80 und die linke Kammer 202.1 des zweiten Blockteils 202 dem zweite Volumen des zweiten Medienwandlers.

In der Ausführungsform gemäss Figur 10 ist der erste Blockteil 201 für das Fluid (Benzin) und der zweite Blockteil 202 für den Brennstoff (LPG) eingerichtet.

Die linken und rechten Kammern weisen jeweils eine Zuleitung und eine Ableitung auf.

Die Zuleitung in die linke Kammer 201.1 und die Zuleitung in die rechte Kammer 201.2 des ersten Blockteils 201 werden durch ein erstes (gemeinsames) Kammer-Zuleitungsventil 220, das als 3/2-Wege-Magnetventil realisiert ist, gesteuert.

Das erste Kammer-Zuleitungsventil 220 ist eingangsseitig mit einem Anschluss 210 zum Ausgang der Antriebseinheit (Hochdruckpumpe) und ausgangsseitig mit der linken und rechten Kammer des ersten Blockteils 201 verbunden sein.

Die Ableitung aus der linken Kammer 201.1 und die Ableitung aus der rechten Kammer 201.2 des ersten Blockteils 201 werden durch ein erstes (gemeinsames) Kammer-Ableitungsventil 221, das als 3/2-Wege-Magnetventil realisiert ist, gesteuert.

Das erste Kammer-Ableitungsventil 221 ist eingangsseitig mit der linken und rechten Kammer des ersten Blockteils 201 und ausgangsseitig mit einem Rücklauf 211 zum Fluidreservoir verbunden.

Der Rücklauf von Fluid aus dem ersten Blockteil 201 in das Fluidreservoir ist über ein Rückschlagventil 217 abgesichert. Das Rückschlagventil 217 weist einen Haltebeziehungsweise Öffnungsdruck auf. Insbesondere weist es einen Öffnungsdruck auf, der oberhalb des Siededrucks des Fluids (beispielsweise Benzins) bei der theoretisch erreichbaren Maximaltemperatur durch Stauwärme liegt, so dass ein Sieden des Fluids im Medienwandler verhindert wird.

Falls es sich beim Fluid um Benzin handelt, kann der Öffnungsdruck beispielsweise zwischen 2 und 5 bar, insbesondere zwischen 2.7 und 3.5 Bar sein.

Die Belegung der Anschlüsse des ersten Kammer-Zuleitungsventil 220 und des ersten Kammer-Ableitungsventil 221 ist folglich derart, dass der erste Kolben 204.1 durch ein gleichläufiges Schalten dieser beiden Ventile in beide Richtungen entlang der Achse der Kolbenverbindung 204.3 bewegbar ist.

Konkret führt die in Figur 10 gezeigte Belegung der Anschlüsse des ersten Kammer-Zuleitungsventil 220 und des ersten Kammer-Ableitungsventil 221 dazu, dass das erste Kammer-Zuleitungsventil 220 Fluid in die rechte Kammer 201.2 leitet und das erste Kammer-Ableitungsventil 221 ein Ausströmen des Fluids aus der rechten Kammer 201.2 verhindert und gleichzeitig ein Ausströmen von Fluid aus der linken Kammer 201.1 ermöglicht, wenn beide Ventile nicht bestromt sind. Folglich wird der erste Kolben 204.1 in Richtung der linken Kammer 201.1 gedrückt.

Bei der gezeigten Belegung der Anschlüsse führt ferner ein gleichzeitiges Bestromen des ersten Kammer-Zuleitungsventils 220 und des ersten Kammer-Ableitungsventils 221 dazu, dass das erste Kammer-Zuleitungsventil 220 Fluid in die linke Kammer 201.1 leitet während das erste Kammer-Ableitungsventil 221 ein Abfliessen des Fluids aus der rechten Kammer 201.2 ermöglicht und aus der linken Kammer 201.1 verhindert. Folglich wird der erste Kolben in Richtung der rechten Kammer 201.2 gedrückt.

Die Zuleitung zu der linken Kammer 202.1 und zu der rechten Kammer 202.2 des zweiten Blockteils 202 sowie die entsprechenden Ableitungen weisen je ein Rückschlagventil auf (erstes zuleitungsseitiges Rückschlagventil 222, zweites zuleitungsseitiges Rückschlagventil 223, erstes ableitungsseitiges Rückschlagventil 224, zweites ableitungsseitiges Rückschlagventil 225).

Diese Rückschlagventile sind insbesondere so geschaltet, dass der Brennstoff ausschliesslich über die eine der beiden Zuleitungen in linke Kammer 202.1 und über die andere der beiden Zuleitungen in die rechte Kammer 202.2 gelangen kann. Ferner kann der Brennstoff ausschliesslich über die eine der beiden Ableitungen aus der linken Kammer 202.1 und über die andere der beiden Ableitungen aus der rechten Kammer 202.2 ausströmen.

Die Eingänge der zuleitungsseitigen Rückschlagventile (222, 223) sind mit einem Anschluss 214 zur Brennstoff-Förderpumpe und somit zum Brennstoffbehälter verbunden.

Die Ausgänge der ableitungsseitigen Rückschlagventile (224, 225) sind mit einem Anschluss 215 zum Einspritzsystem verbunden. Ergänzend sind die Ausgänge der ableitungsseitigen Rückschlagventile (224, 225) über einen Rücklauf mit einem Brennstoffreservoir-Anschluss 213 verbunden. Ein Rückfluss von Brennstoff über den Brennstoffreservoir-Anschluss 213 in das Brennstoffreservoir wird durch ein Brennstoffrückfluss-Ventil 208 gesteuert.

Das Umschalten zwischen der Förderung des Brennstoffs (LPG) und der Förderung des Fluids (Benzin) zum Anschluss 215 zum Einspritzsystem geschieht in der gezeigten Ausführungsform wiederum über ein Umschaltventil 207.

Das Umschaltventil 207 ist als 3/2-Wege-Magnetventil realisiert, das eingangsseitig mit dem Anschluss (Eingang) 210 zum Ausgang der Antriebseinheit und ausgangsseitig mit dem ersten Kammer-Zuleitungsventil 220 und mit dem Anschluss 215 zum Einspritzsystem verbunden ist. In der gezeigten Ausführungsform leitet das unbestromte Umschaltventil 207 Fluid zum Anschluss 215 zum Einspritzsystem.

Die Ausführungsform gemäss **Figur 10** zeigt ferner folgende optionalen Merkmale, die ein System in irgendeiner Ausführungsform gemäss zweiten Aspekt einzeln oder in Kombination aufweisen kann:
- Die in Figur 10 gezeigte Ausführungsform weist eine als Kühlleitung ausgelegte Brennstoff-Rücklaufleitung 231 zum Brennstoffreservoir-Anschluss 213 auf. Die Brennstoff-Rücklaufleitung 231 ist zumindest teilweise als Kühlbohrungen 230 realisiert, welche über eine Kühldüse 232, eine Rücklaufblende und/oder einen Druckregel gespeist wird.
   Die Kühlbohrungen 230 befinden sich in der Umwandung des Hydraulikblocks.
- Die in Figur 10 gezeigte Ausführungsform weist ein System zum Austausch von unterschiedlichen, zum Betrieb einer Kraftmaschine verwendbaren Kraftstoffen, das heisst ein System gemäss erstem Aspekt, auf.
   Gezeigt ist ein Anschluss 212 zum Druckspeicher sowie das dem Druckspeicher vorgeschaltete Druckspeicherventil 206. Das Druckspeicherventil 206 ist eingangsseitig mit dem Anschluss 210 zum Ausgang der Antriebseinheit (Hochdruckpumpe) und mit dem Eingang des Umschaltventils 207 verbunden.
   Der Kraftstoffaustausch im Einspritzsystem ist folglich in der gezeigten Ausführungsform zusätzlich über das Umschaltventil 207 gesteuert.

Die in **Figur 10** gezeigte Ausführungsform ist ferner geeignet, Druckeinbrüchen, die beim Umschalten der Förderrichtung, das heisst beim Umschalten von einer Förderung über die linke Kammer 202.1 des zweiten Blockteils 202 auf eine Förderung über die rechte Kammer 202.2 des zweiten Blockteils 202 und umgekehrt, entgegenzuwirken.

Dies kann beispielsweise dadurch realisiert werden, indem das erste Kammer-Zuleitungsventil 220 und das erste Kammer-Ableitungsventil 221 nicht völlig synchron arbeiten, sondern beim Umschalten für einen Moment so bestromt sind, dass sowohl die Zu- als auch Ableitung der einen der beiden Kammern des ersten Blockteils 201 geschlossen sind und sowohl die Zu- als auch die Ableitung der anderen der beiden Kammern offen sind.

Falls das System den optionale Druckspeicher gemäss erstem Aspekt wie in Figur 10 gezeigt aufweist (Anschluss 212 zum Druckspeicher und Druckspeicherventil 206 in Figur 10), so kann den Druckeinbrüchen auch durch kurzeitiges Öffnen des Druckspeicherventils 206 entgegengewirkt werden.

Falls es sich bei der Antriebseinheit um eine (Benzin-)Hochdruckpumpe handelt, geschieht das Schalten des ersten Kammer-Zuleitungsventil 220 und des ersten Kammer-Ableitungsventil 221 in Abhängigkeit der Stellung der (Benzin-) Hochdruckpumpe (oder der Nockenwelle), beziehungsweise bei Förderung oder Nullförderung des Fluids.

In der in Figur 10 gezeigten Ausführungsform, weist das System 200 ferner REED-Kontakte 205 auf. Diese sind so am ersten und zweiten Blockteil angeordnet, dass sie Auslösen, wenn sich der erste oder zweite Kolben in der Endstellung, insbesondere in maximaler Auslenkung, befindet.

Das Schalten des ersten Kammer-Zuleitungsventil 220 und des ersten Kammer-Ableitungsventil 221 ist direkt oder indirekt über die Steuerung an das Auslösen der REED-Kontakte 205 gekoppelt.

**Figur 11** zeigt schematisch den Zulauf einer Ausführungsform des Systems 200 gemäss zweitem Aspekt, das hydraulisch und/oder -je nach konkreter Ausführungsform - mechanisch, betreiben wird. Dadurch kann auf eine Vielzahl von Bauteilen, die bei einem elektronischen Betrieb benötigt werden, verzichtete werden.

Insbesondere kann auf elektrisch angesteuerte Ventile des Medienwandler, wie beispielsweise die in den Figuren 4-10 genannten steuerbaren Ventile (30, 30.1, 30.2), zuleitungsseitige Steuerventile (55.1, 55.2), erstes Kammer-Zuleitungsventil 220 und Kammer-Ableitungsventil 221, und die REED-Kontakte 205 verzichtete werden.

In der in **Figur 11** gezeigten Ausführungsform weist das System ein rechtes Ventil 227 und ein linkes Ventil 228 auf, welche hydraulisch und/oder mechanisch geschalten sind und an Stelle des ersten Kammer-Zuleitungsventils 220 und des ersten Kammerableitungsventils 221 zum Einsatz kommen.

Rechtes und linkes Ventil können insbesondere innerhalb des Hydraulikblocks, insbesondere in der Umwandung des Blocks, angeordnet sein.

Rechtes und linkes Ventil sind eingangsseitig mit dem Umschaltventil 207 verbunden.

Das rechte Ventil 227 kontrolliert den Zufluss von Fluid in die recht Kammer 201.2 des ersten Blockteils 201. Das linke Ventil 228 kontrolliert den Zufluss von Fluid in die linke Kammer 201.1 des ersten Blockteils 201.

Die beiden Ventile schalten gegenläufig, d.h. im Betrieb ist jeweils eines der beiden Ventile geöffnet und das andere Ventil geschlossen. Damit ist ein zur Ausführungsform mit erstem Kammer-Zuleitungsventil 220 und erstem Kammer-Ableitungsventil 221 äquivalenter Betrieb des Systems 200 möglich.

Das Schalten findet insbesondere dann statt, wenn der erste Kolben 204.1 eine, beispielsweise durch einen Endanschlag definierte, maximale Auslenkung einnimmt. In der gezeigten Ausführungsform gibt es im Betrieb zwei maximale Auslenkungen des ersten Kolbens 204.1: Eine erste maximale Auslenkung ist erreicht, wenn das Volumen der linken Kammer 201.1 minimal und das Volumen der rechten Kammer 201.2 maximal ist. Eine zweite maximale Auslenkung ist erreicht, wenn das Volumen der linken Kammer 201.1 maximal und das Volumen der rechten Kammer 201.2 minimal ist.

In Figur 11 ist der Zustand bei erster maximaler Auslenkung des ersten Kolbens 204.1 gezeigt.

Das Schalten der Ventile kann insbesondere durch einen in der maximalen Auslenkung auftretenden Staudruck auslösbar sein.

Die beiden Ventile können beispielsweise durch eine Feder vorgespannt oder vorspannbar sein. Die vorgespannte Feder kann eine in die Kammer führende Bohrung verschliessen. Entsprechend kann eine entspannte Feder die besagte Bohrung öffnen. Eine umgekehrte Konfiguration ist auch denkbar.

Alternativ oder ergänzend zu einem hydraulischen, insbesondere über den Staudruck ausgelösten, Schalten, ist auch ein mechanisches Schalten möglich, beispielsweise indem der erste Kolben 204.1 in der maximalen Auslenkung oder kurz vor der maximalen Auslenkung mit einen mechanischen Hebel wechselwirkt.

Insbesondere kann ein vom Zustand des mechanischen Hebels abhängiger Steuerstrom den Zustand (offen oder geschlossen) des rechten Ventils 227 und des linken Ventils 228 definieren. Beispielsweise kann der Steuerstrom ein Wechseln der Feder von einem entspannten in einen gespannten Zustand und umgekehrt bewirken.

Weder die hydraulische oder mechanische Schaltung des Medienwandlers noch die vorgängig beschriebenen Massnahmen zur Verhinderung von Druckeinbrüchen sind auf eine Ausführungsform des Systems gemäss den Figuren 10 und 11 beschränkt. Vielmehr können beide alleine oder in Kombination in jeder Ausführungsform des Systems zum Einsatz kommen.

## Patentansprüche

1. Kraftstoffanlage (20) aufweisend ein Fluidreservoir (1, 62) für ein Fluid (21, 60), einen Brennstoffbehälter (11, 63) für einen Brennstoff (23, 61), eine Kraftstoff-Hochdruckpumpe (31), ein Leitungssystem sowie ein System zur Förderung eines Brennstoffes für die Versorgung einer Kraftmaschine im bi-fuel Betrieb, wobei das System:
• ein Leitungssystem, in welchem ein als Fluid (22, 60) agierender erster Kraftstoff und ein von diesem Fluid verschiedener Brennstoff (23, 61) als zweiter Kraftstoff führbar sind;
• ein Medienwandler (32, 80), welcher dazu eingerichtet ist, den Brennstoff (23, 61) durch das Leitungssystem zu fördern; und
• einen Anschluss (48, 56, 210) über den das System zur Förderung des Brennstoffes mit einer Kraftstoff-Hochdruckpumpe (31) verbindbar ist, wobei die Kraftstoff-Hochdruckpumpe (31) dazu eingerichtet ist, das Fluid (22, 60) durch das Leitungssystem zu bewegen und wobei der Anschluss (48, 56, 210) dazu eingerichtet ist, Fluid (22, 60) dem Medienwandler (32, 80) zuzuführen;
aufweist,
wobei der Medienwandler (32, 80) ein auslenkbares Element (37, 38, 204), ein erstes Volumen (35, 201.1, 201.2) für das Fluid (22, 60), ein zweites Volumen (36, 202.1, 202.2) für den Brennstoff und eine erste Zuleitung (33.1, 33.1.1, 33.1.2), über welche das Fluid in das erste Volumen (35, 201.1, 201.2) strömen kann, aufweist, wobei der Medienwandler (32, 80) eingerichtet ist, über die erste Zuleitung (33.1, 33.1.1, 33.1.2) in das erste Volumen (35, 202.1, 202.2) strömendes, im Druck variierendes Fluid (22, 60) in eine Auslenkung des auslenkbaren Elements (37, 38, 204) zu übersetzten und über die Auslenkung des auslenkbaren Elements (37, 38, 204) eine Pumpwirkung auf den Brennstoff (23, 61) zu erzeugen, wobei das System ein Umschaltventil (43, 207) aufweist und dass das System und das Umschaltventil so ausgelegt sind, dass zwischen einer Versorgung der Kraftmaschine mit Fluid und einer Versorgung mit Brennstoff geschalten werden kann, wobei der Medienwandler eingerichtet ist, einen zeitlichen Verlauf der Pumpwirkung zu erzeugen, der für die Versorgung der Kraftmaschine mit Brennstoff geeignet ist,
und die Kraftstoffanlage (20) einen Anschlusspunkt (51, 215) aufweist, über den die Kraftstoffanlage mit dem Einspritzsystem der Kraftmaschine verbindbar ist, wobei die Kraftstoffanlage genau einen Anschlusspunkt zur Versorgung der Kraftmaschine mit Fluid oder Brennstoff aufweist.

2. Kraftstoffanlage nach Anspruch 1, wobei das Umschaltventil in das Leitungssystem des Systems integriert ist.

3. Kraftstoffanlage nach Anspruch 1 oder 2, wobei das erste Volumen (35, 201.1, 201.2) senkrecht zu einer Auslenkrichtung des auslenkbaren Elements (37, 38, 204) im ersten Volumen ein erstes Profil und das zweite Volumen (36, 202.1, 202.2) senkrecht zu einer Auslenkrichtung des auslenkbaren Elements (37, 38, 204) im zweiten Volumen ein zweites Profil aufweist, wobei das auslenkbare Element (37, 38, 204) eine erste Stirnfläche (67), welche das erste Profil hat, und eine zweite Stirnfläche (68), welche das zweite Profil hat, aufweist und wobei erstes und zweites Profil dazu eingerichtet sind, dass das System als Druck-und/oder Fördermengenwandler betreibbar ist.

4. Kraftstoffanlage nach Anspruch 3, wobei das System eine zweite Zuleitung (34.1) aufweist, die mit dem zweiten Volumen (36, 202.1, 202,2) verbunden ist, wobei die zweite Zuleitung mit einer Vordruckpumpe oder einer Brennstoff-Förderpumpe verbindbar ist und wobei das System eingerichtet ist, einen durch ein Flächenverhältnis zwischen erster und zweiter Stirnfläche eingestellten Druckunterschied des geförderten Brennstoffs (23, 61) im Vergleich zum antreibenden Fluid (22, 60) und eine mit der zusätzlichen Vordruckpumpe beziehungsweise mit der Brennstoff-Förderpumpe erzeugte Druckdifferenz zu addieren.

5. Kraftstoffanlage nach einem der Ansprüche 1-4, wobei der Medienwandler (32, 80) neben der ersten Zuleitung (33.1) eine erste Ableitung (33.2) sowie eine zweite Zuleitung (34.1) und eine zweite Ableitung (34.2) aufweist, wobei erste Zu-/Ableitung (33.1, 33.2) mit dem ersten Volumen (35, 201.1, 201.2) und zweite Zu-/Ableitung (34.1, 34.2) mit dem zweiten Volumen (36, 202.1, 202.2) verbunden sind.

6. Kraftstoffanlage nach Anspruch 5, wobei das Fluid (22, 60) über die erste Zuleitung (33.1) in das erste Volumen (35, 201.1, 201.2) und der Brennstoff (23, 61) über die zweite Zuleitung (34.1) in das zweite Volumen (36, 202.1, 202.2) einbringbar sind, wobei das Fluid (22, 60) im ersten Volumen (35, 201.1, 201.2) unter einem ersten Druck und der Brennstoff (23, 61) im zweiten Volumen (36, 202.1, 202.2) unter einem zweiten Druck steht, und wobei der Medienwandler (32, 80) dazu eingerichtet ist, einen Druckunterschied zwischen erstem und zweitem Druck über eine Auslenkung des auslenkbaren Elements (37, 38, 204) in eine Förderung des Brennstoffes (23, 61) im Leitungssystem und/oder in eine Änderung des zweiten Drucks zu übersetzten.

7. Kraftstoffanlage nach Anspruch 5 oder 6, wobei mindestens ein zuleitungsseitiges Steuerventil (55.1, 55.2, 220) und mindestens ein ableitungsseitiges steuerbares Ventil (30.1, 30.2, 221) dazu eingerichtet sind, dass das über die erste Zuleitung (33.1) in das erste Volumen (35, 201.1, 201.2) strömende Fluid (22, 60) einen Druck aufweist, der variiert.

8. Kraftstoffanlage nach einem der Ansprüche 1-7, wobei das System mindestens zwei Medienwandler (32.1, 32.2, 80) aufweist, welche parallel geschalten sind und zueinander asynchron arbeiten.

9. Kraftstoffanlage nach Anspruch 8, wobei die zwei Medienwandler als Hydraulikblock aufweisend
• einen ersten Blockteil (201) mit einer linken Kammer (201.1) des ersten Blockteils und einer rechten Kammer (201.2) des ersten Blockteils,
• einen zweiten Blockteil (202) mit einer linken Kammer (202.1) des zweiten Blockteils und einer rechten Kammer (202.2) des zweiten Blockteils, und
• einem dritten Blockteil (203), der den ersten Blockteil (201) vom zweiten Blockteil (202) trennt,
realisiert sind, wobei die linke Kammer (201.1) des ersten Blockteils das erste Volumen eines ersten Medienwandlers, die rechte Kammer (202.2) des zweiten Blockteils das zweite Volumen des ersten Medienwandlers, die rechte Kammer (201.2) des ersten Blockteils das ersten Volumen eines zweiten Medienwandlers und die linke Kammer (202.1) des zweiten Blockteils das zweite Volumen des zweiten Medienwandlers ist, wobei das auslenkbare Element (204) einen ersten Kolben (204.1), der die linke Kammer (201.1) des ersten Blockteils von der rechten Kammer (201.2) des ersten Blockteils trennt, einen zweiten Kolben (204.2), der die linke Kammer (202.1) des zweiten Blockteils von der rechten Kammer (202.2) des zweiten Blockteils trennt und eine Kolbenverbindung (204.3) aufweist, wobei die Kolbenverbindung (204.3) eine starre Verbindung zwischen erstem und zweitem Kolben bildet.

10. Kraftstoffanlage nach einem der Ansprüche 1-9, wobei der Medienwandler (32, 80) eine Umwandung und eine darin befindliche Kühlbohrung (230) aufweist, welche mit Brennstoff (23, 61) gespeist werden kann und dazu eingerichtet ist, zumindest einen Teil des Medienwandlers (32, 80) zu kühlen, indem die Kühlbohrung (230) mit Brennstoff (23, 61) gespeist werden kann, eine Blende und/oder eine Düse (232) und/oder einen Druckregler aufweist und dazu eingerichtet ist, mindestens einen Teil des Medienwandlers (32, 80) durch eine bei der Verdampfung des Brennstoffs (23, 61) auftretende Kühlwirkung zu kühlen.

11. Kraftstoffanlage nach einem der Ansprüche 1-10, wobei das System als Diebstahlschutz eingerichtet ist, indem es einen Empfänger, einen tragbaren Sender und eine Steuerung aufweist, wobei die Steuerung die Ventile des Systems so schaltet, dass von einer Brennstoff-Förderpumpe geförderter Brennstoff und von einer Fluid-Förderpumpe gefördertes Fluid in einen Brennstoffbehälter beziehungsweise in ein Fluidreservoir zurückbefördert wird, wenn der Empfänger nicht mit dem Sender in Kontakt steht.

12. Kraftstoffanlage (20) nach Anspruch 1, wobei die Kraftstoff-Hochdruckpumpe (31) das Fluid (22) mit dem variierenden Druck beaufschlagt, unter welchem es über die erste Zuleitung (33.1, 33.1.1, 33.1.2) in das erste Volumen (35, 201.1, 201.2) strömt.

13. Antriebsaggregat aufweisend eine Kraftmaschine, wobei das Antriebsaggregat durch eine Kraftstoffanlage gemäss einem der Ansprüche 1 bis 12 gekennzeichnet ist.

14. Verfahren zur Versorgung einer Kraftmaschine mit Brennstoff unter Verwendung einer Kraftstoffanlage (20) nach einem der Ansprüche 1-12, aufweisend die Schritte:
• Bereitstellen eines ersten Volumens (35, 201.1, 201.2), eines zweiten Volumens (36, 202.1, 202.2), eines Fluids (22, 60) und eines vom Fluid verschiedenen Brennstoffs (23, 61), wobei das erste Volumen durch ein auslenkbares Element (37, 38, 204) vom zweiten Volumen getrennt ist;
• Beaufschlagen des Fluids (22, 60) mit einem ersten Druck;
• Befüllen des zweiten Volumens mit Brennstoff, wobei der Brennstoff unter einem zweiten Druck steht;
• Befüllen des ersten Volumens (35, 201.1, 201.2) mit dem unter erstem Druck stehenden Fluid (22, 60), wobei der erste Druck höher ist als der zweite Druck und wobei das auslenkbare Element unter Erzeugung einer Pumpwirkung auf den Brennstoff ausgelenkt wird,
wobei zwischen einer Versorgung der Kraftmaschine mit Fluid und einer Versorgung der Kraftmaschine mit Brennstoff umgeschaltet wird.

## Claims

1. A fuel facility (20) comprising a fluid reservoir (1, 62) for a fluid (22, 60), a combustible container (11, 63) for a combustible (23, 61), a fuel high-pressure pump (31), a conduit system and a system for the delivery of a combustible for supplying an engine in bi-fuel operation, wherein the system comprises
- a conduit system, in which a fluid (22, 60) being a first fuel and a combustible (23, 61) being a second fuel which is different to this fluid can be led;
- a media transformer (32, 80) which is configured to deliver the combustible (23, 61) through the conduit system; and
- a connection (48, 56, 210) via which the system for the delivery of the combustible can be connected to a fuel high-pressure pump (31), wherein the fuel high-pressure pump (31) is configured to move the fluid (22, 60) through the conduit system and wherein the connection (48, 56, 210) is configured to feed the fluid (22, 60) to the media transformer (32, 80);
wherein the media transformer (32, 80) comprises a deflectable element (37, 38, 204), a first volume (35, 201.1, 201.2) for the fluid (22, 60), a second volume (36, 202.1, 202.2) for the combustible and a first feed conduit (33.1, 33.1.1, 33.1.2), via which the fluid can flow into the first volume (35, 201.1, 201.2), wherein the media transformer is configured to convert fluid (22, 60) which flows into the first volume (35, 201.1, 201.2) via the first feed conduit (33.1, 33.1.1, 33.1.2) and which has a pressure that varies into a deflection of the deflectable element (37, 38, 204) and to generate a pumping effect upon the combustible (23, 61) via the deflection of the deflectable element (37, 38, 204), wherein the system comprises a switch-over valve (43, 207) and wherein the system and the switch-over valve are configured in a manner that it can be switched between a supply of the engine with fluid and a supply of the engine with combustible, wherein the media transformer is configured to generate a temporal course of the pumping effect that is suitable for a supply of the engine with combustible, and the fuel facility (20) comprises a connection point (51, 215) via which the fuel facility can be connected with the injection system of the engine, wherein the fuel facility comprises just one connection point for supplying the engine with fluid or combustible.

2. A fuel facility according to claim 1, wherein the switch-over valve is integrated into the conduit system of the system.

3. A fuel facility according to claim 1 or 2, wherein the first volume (35, 201.1, 201.2) perpendicularly to a deflection direction of the deflectable element (37, 38, 204) in the first volume comprises a first profile and the second volume (36, 202.1, 202.2) perpendicularly to a deflection direction of the deflectable element (37, 38, 204) in the second volume comprises a second profile, wherein the deflectable element (37, 38, 204) comprises a first end-face (67) which has the first profile, and a second end-face (68) which has the second profile, and wherein the first profile and the second profile are configured for the system to be operable as a pressure transformer and/or delivery rate transformer.

4. A fuel facility according to claim 3, wherein the system comprises a second feed conduit (34.1) that is connected to the second volume (36, 202.1, 202.2), wherein the second feed conduit can be connected to a pre-compression pump or to a combustible delivery pump, and wherein the system is configured to sum a difference in pressure, said difference in pressure being between the delivered combustible (23, 61) and the driving fluid (22, 60) and being set by a surface ratio between the first and second end-faces, and a pressure difference that is generated by the additional pre-compression pump or the combustible delivery pump.

5. A fuel facility according to one of the claims 1-4, wherein apart from the first feed conduit (33.1), the media transformer (32, 80) comprises a first discharge conduit (33.2) as well as a second feed conduit (34.1) and a second discharge conduit (34.2), wherein the first feed conduit / discharge conduit (33.1, 33.2) is connected to the first volume (35, 201.1, 201.2) and the second feed conduit / discharge conduit (34.1, 34.2) is connected to the second volume (36, 202.1, 202.2).

6. A fuel facility according to claim 5, wherein the fluid (22, 60) can be brought into the first volume (35, 201.1, 201.2) via the first feed conduit (33.1, 33.1.1, 33.1.2) and the combustible (23, 61) can be brought into the second volume (36, 202.1, 202.2) via the second feed conduit (34.1), wherein the fluid (22, 60) in the first volume (35, 201.1, 201.2) is at a first pressure and the combustible (23, 61) in the second volume (36, 202.1, 202.2) is at a second pressure and wherein the media transformer (32, 80) is configured to use a pressure difference between the first pressure and the second pressure for deflecting the deflectable element (37, 38, 204) and for delivering the combustible (23, 61) in the conduit system and/or for a change of the second pressure.

7. A fuel facility according to claim 5 or 6, wherein at least one feed-conduit-side control valve (55.1, 55.2, 220) and at least one discharge-conduit-side controllable valve (30.1, 30.2, 221) are configured such that the fluid (22, 60) which flows into the first volume (35, 201.1, 201.2) via the first feed conduit (33.1) has a pressure which varies.

8. A fuel facility according to one of the claims 1-7, wherein the system comprises at least two media transformers (32.1, 32.2, 80) which are connected in parallel and operated asynchronously to one another.

9. A fuel facility according to claim 8, wherein the two media transformers are realised as a hydraulic block comprising
- a first block part (201) with a left chamber (201.1) of the first block part and with a right chamber (201.2) of the first block part,
- a second block part (202) with a left chamber (202.1) of the second block part and with a right chamber (202.2) of the second block part, and
- a third block part (203) which separates the first block part (201) from the second block part (202),
wherein the left chamber (201.1) of the first block part is the first volume of a first media transformer, the right chamber (202.2) of the second block part the second volume of the first media transformer, the right chamber (201.2) of the first block part the first volume of a second media transformer and the left chamber (202.1) of the second block part the second volume of the second media transformer, wherein the deflectable element (204) comprises a first piston (204.1) which separates the left chamber (201.1) of the first block part from the right chamber (201.2) of the first block part, a second piston (204.2) which separates the left chamber (202.1) of the second block part from the right chamber (202.2) of the second block part and comprises a piston connection (204.3), wherein the piston connection (204.3) forms a rigid connection between the first and the second piston.

10. A fuel facility according to one of the claims 1-9, wherein the media transformer (32, 80) comprises a surrounding wall and a cooling bore (230) which is located therein and which can be fed with combustible (23, 61) and is configured to cool at least a part of the media transformer (32, 80) by the cooling bore (230) being configured to be fed with combustible (23, 61), comprising an aperture and/or a nozzle (232) and/or a pressure regulator and being configured to cool at least a part of the media transformer (32, 80) by way of a cooling effect which occurs on evaporation of the combustible (23, 61).

11. A fuel facility according to one of the claims 1-10, wherein the system is configured as a theft protection, by way of it comprising a receiver, a portable transmitter and a control, wherein the control switches the valves of the system such that combustible which is delivered by a combustible delivery pump and fluid which is delivered by a fluid delivery pump is transported back into a combustible container and into a fluid reservoir respectively, when the receiver is not in contact with the transmitter.

12. A fuel facility (20) according to claim 1, wherein the fuel high-pressure pump (31) subjects the fluid (22) to the varying pressure, at which it flows via the first feed conduit (33.1, 33.1.1, 33.1.2) into the first volume (35, 201.1, 201.2).

13. A drive assembly comprising an engine, wherein the drive assembly is **characterised by** a fuel facility according to one of claims 1-12.

14. A method for supplying an engine with combustible by using a fuel facility (20) according to one of claims 1-12, the method comprising the steps of:
- Providing a first volume (35, 201.1, 201.2), a second volume (36, 202.1, 202.2), a fluid (22, 60) and a combustible (23, 61) which is different to this fluid, wherein the first volume is separated from the second volume by a deflectable element;
- Subjecting the fluid (22, 60) to a first pressure;
- Filling the second volume with combustible, wherein the combustible is at a second pressure;
- Filling of the first volume (35, 201.1, 201.2) with the fluid that is at the first pressure, wherein the first pressure is higher than the second pressure and wherein the deflectable element is deflected and generates a pumping effect upon the combustible by this,
wherein it is switched between a supply of the engine with fluid and a supply of the engine with combustible.

## Revendications

1. Installation de carburant (20) présentant un réservoir (1, 62) pour un fluide (22, 60), un réservoir (11, 63) pour un carburant (23, 61), une pompe à haute pression de carburant (31) et un système de conduits et un système de transport d'un carburant servant à alimenter un moteur à combustion interne en mode bi-carburant, le système présentant:
- un système de conduits dans lequel un premier combustible agissant comme fluide (22, 60) et un carburant (23, 61) différent de ce fluide peuvent être apportés comme second combustible,
- un convertisseur (32, 80) de fluides conçu pour transporter le carburant (23, 61) dans le système de conduits, et
- un raccordement (48, 56, 210) par l'intermédiaire duquel le système de transport de carburant peut être raccordé à une pompe à haute pression de carburant (31), la pompe à haute pression de carburant (31) étant conçue pour déplacer le fluide (22, 60) dans le système de conduits et le raccordement (48, 56, 210) étant conçu pour amener le fluide (22, 60) au convertisseur (32, 80) de fluides,
le convertisseur (32, 80) de fluides présentant un élément déviable (37, 38, 204), un premier volume (35, 201.1, 202.1) pour le fluide (22, 60), un deuxième volume (36, 202.1, 202.2) pour le carburant et un premier conduit d'amenée (33.1, 33.1.1, 33.1.2) par lequel le fluide peut pénétrer dans le premier volume (35, 201.1, 202.1), le convertisseur (32, 80) de fluides étant conçu pour convertir en une déviation de l'élément déviable (37, 38, 204) le fluide (22, 60) qui pénètre sous pression variable dans le premier volume (35, 201.1, 202.1) par l'intermédiaire du premier conduit d'amenée (33.1, 33.1.1, 33.1.2) et pour exercer sur le carburant (23, 61) un effet de pompage par l'intermédiaire de la déviation de l'élément déviable (37, 38, 204),
le système présentant une soupape de commutation (43, 207), le système et la soupape de commutation étant conçus de manière à permettre d'alimenter le moteur en fluide ou d'alimenter le moteur en carburant, le convertisseur de fluides étant conçu pour que l'effet de pompage évolue dans le temps de manière à convenir pour alimenter le moteur en carburant, et l'installation de carburant (20) présentant un point de raccordement (51, 215) par l'intermédiaire duquel l'installation de carburant peut être raccordée au système d'injection du moteur, l'installation de carburant présentant un seul point de raccordement pour l'alimentation du moteur en fluide ou en carburant.

2. Installation de carburant selon la revendication 1, dans lequel la soupape de commutation est intégrée dans le système de conduits du système.

3. Installation de carburant selon les revendications 1 ou 2, dans lequel le premier volume (35, 201.1, 202.1) présente un premier profil perpendiculairement à la direction de déviation de l'élément déviable (37, 38, 204) dans le premier volume et le deuxième volume (36, 202.1, 202.2) présente un deuxième profil perpendiculairement à la direction de déviation de l'élément déviable (37, 38, 204) dans le deuxième volume, l'élément déviable (37, 38, 204) présentant une première surface frontale (67) présentant le premier profil et une deuxième surface frontale (68) présentant le deuxième profil, le premier profil et le deuxième profil étant conçus pour permettre d'utiliser le système comme convertisseur de pression ou comme convertisseur de débit.

4. Installation de carburant selon la revendication 3, le système présentant un deuxième conduit d'amenée (34.1) relié au deuxième volume (36, 202.1, 202.2), le deuxième conduit d'amenée pouvant être relié à une pompe de mise sous pré-pression ou à une pompe de transport de carburant et le système étant conçu pour additionner une différence de pression entre le carburant (23, 61) transporté et le fluide (22, 60) d'entraînement, établie par l'intermédiaire du rapport entre l'aire de la première surface frontale et celle de la deuxième surface frontale, et une différence de pression formée par la pompe de mise sous pré-pression supplémentaire ou par la pompe de transport de carburant.

5. Installation de carburant selon l'une des revendications 1 à 4, dans lequel le convertisseur (32, 80) de fluides présente en plus du premier conduit d'amenée (33.1) un premier conduit de sortie (33.2) ainsi qu'un deuxième conduit d'amenée (34.1) et qu'un deuxième conduit de sortie (34.2), le premier conduit d'amenée/de sortie (33.1, 33.2) étant reliés au premier volume (35, 201.1, 202.1) et le deuxième conduit d'amenée/de sortie (34.1, 34.2) étant reliés au deuxième volume (36, 202.1, 202.2).

6. Installation de carburant selon la revendication 5, dans lequel le fluide (22, 60) peut être amenée dans le premier volume (35, 201.1, 202.1) par l'intermédiaire du premier conduit d'amenée (33.1) et le carburant (23, 61) peut être amené dans le deuxième volume (36, 202.1, 202.2) par l'intermédiaire du deuxième conduit d'amenée (34.1), le fluide (22, 60) étant mis sous une première pression dans le premier volume (35, 201.1, 202.1) et le carburant (23, 61) étant mis sous une deuxième pression dans le deuxième volume (36, 202.1, 202.2), le convertisseur (32, 80) de fluides étant conçu pour convertir par l'intermédiaire d'une déviation de l'élément déviable une différence de pression entre la première et la deuxième pression en un transport du carburant (23, 61) dans le système de conduits et/ou en une modification de la deuxième pression.

7. Installation de carburant selon les revendications 5 ou 6, dans lequel une ou plusieurs soupapes de commande (55.1, 55.2, 220) situées côté conduit d'amenée et une ou plusieurs soupapes asservies (30.1, 30.2, 221) situées côté conduit de sortie sont conçues pour que le fluide (22, 60) qui pénètre dans le premier volume (35, 201.1, 202.1) par l'intermédiaire du premier conduit d'amenée présente une pression variable.

8. Installation de carburant selon l'une des revendications 1 à 7, présentant deux ou plusieurs convertisseurs de fluides (32.1, 32.2, 80) reliés en parallèle et travaillant de manière asynchrone les uns par rapport aux autres.

9. Installation de carburant selon la revendication 8, dans lequel les deux convertisseurs de fluides sont configurés comme bloc hydraulique présentant :
- une première partie de bloc (201) dotée d'une chambre gauche (201.1) de première partie de bloc et d'une chambre droite (201.2) de première partie de bloc,
- une deuxième partie de bloc (202) dotée d'une chambre gauche (202.1) de deuxième partie de bloc et d'une chambre droite (202.2) de deuxième partie de bloc,
- une troisième partie de bloc (203) qui sépare la première partie de bloc (201) de la deuxième partie de bloc (202),
la chambre gauche (201.1) de la première partie de bloc formant le premier volume d'un premier convertisseur de fluides, la chambre droite (202.2) de la deuxième partie de bloc formant le deuxième volume du premier convertisseur de fluides, la chambre droite (201.2) de la première partie de bloc formant le premier volume d'un deuxième convertisseur de fluides et la chambre gauche (202.1) de la deuxième partie de bloc formant le deuxième volume du deuxième convertisseur de fluides, l'élément déviable (204) présentant un premier piston (204.1) qui sépare la chambre gauche (201.1) de la première partie de bloc de la chambre droite (201.2) de la première partie de bloc, un deuxième piston (204.2) qui sépare la chambre gauche (202.1) de la deuxième partie de bloc de la chambre droite (202.2) de la deuxième partie de bloc, ainsi qu'une liaison de pistons (204.3), la liaison de pistons (204.3) formant une liaison rigide entre le premier et le deuxième piston.

10. Installation de carburant selon l'une des revendications 1 à 9, dans lequel le convertisseur (32, 80) de fluides présente une paroi d'enveloppe traversée par un alésage de refroidissement (230), l' alésage de refroidissement pouvant être alimentée en carburant (23, 61) et étant conçue pour refroidir une ou plusieurs parties du convertisseur (32, 80) de fluides grâce au fait que l'alésage de refroidissement (230) peut recevoir du carburant (23, 61), présente un écran et/ou une tuyère (232) et/ou un régulateur de pression et est conçue pour refroidir une ou plusieurs parties du convertisseur (32, 80) de fluides par l'action de refroidissement associée à l'évaporation du carburant (23, 61).

11. Installation de carburant selon l'une des revendications 1 à 10, conçu comme protection contre le vol grâce au fait qu'il présente un récepteur, un émetteur portable et une commande, la commande commutant les soupapes du système de telle sorte que le carburant transporté par une pompe de transport de carburant et le fluide transporté par une pompe de transport de fluide soient renvoyés l'un dans un réservoir de carburant et l'autre dans un réservoir de fluide lorsque le récepteur n'est pas en contact avec l'émetteur.

12. Installation de carburant (20) selon la revendication 1, dans laquelle la pompe à haute pression de carburant (31) applique sur le fluide (22) la pression variable sous laquelle le fluide pénètre dans le premier volume (35, 201.1, 202.1) par l'intermédiaire du premier conduit d'amenée (33.1, 33.1.1, 33.1.2).

13. Groupe moteur présentant un moteur, le groupe moteur étant **caractérisé par** une installation de carburant selon l'une des revendications 1 à 12.

14. Procédé d'alimentation d'un moteur en carburant en recourant à une installation de carburant (20) selon l'une des revendications 1 à 12, le procédé présentant les étapes qui consistent à :
- mettre à disposition un premier volume (35, 201.1, 202.1), un deuxième volume (36, 202.1, 202.2), un fluide (22, 60) et un carburant (23, 61) différent du fluide, le premier volume étant séparé du deuxième volume par un élément déviable (37, 38, 204),
- appliquer une première pression sur le fluide (22, 60),
- remplir le deuxième volume par du carburant, le carburant étant mis sous une deuxième pression,
- remplir le premier volume (35, 201.1, 202.1) par le fluide (22, 60) mis sous la première pression, la première pression étant supérieure à la deuxième pression et l'élément déviable appliquant un effet de pompage sur le carburant en étant dévié,
le procédé présentant une commutation de l'alimentation du moteur en fluide sur une alimentation du moteur en carburant.
